# EUROPÄISCHE PATENTSCHRIFT

(11) **EP 2 931 082 B1**
(45) Veröffentlichungstag und Bekanntmachung des Hinweises auf die Patenterteilung: **26.04.2017**
(21) Anmeldenummer: 14738525.6
(22) Anmeldetag: 11.07.2014
(51) Int. Cl.: A47B 47/04, F16B 12/14, F16B 12/12, F16B 12/46

(54) **MODULARES MÖBELSYSTEM**
MODULAR FURNITURE SYSTEM
SYSTÈME DE MOBILIER MODULAIRE

(30) Priorität: 12.07.2013 DE 102013213741
(43) Veröffentlichungstag der Anmeldung: 21.10.2015
(73) Patentinhaber: Uptmoor, Dirk, 10318 Berlin (DE)
(72) Erfinder: UPTMOOR, Dirk, 10318 Berlin (DE); COCCIA, Francesco, 10437 Berlin (DE)
(74) Vertreter: Patentanwälte Bressel und Partner mbB
(86) Internationale Anmeldenummer: PCT/EP2014/064973
(87) Internationale Veröffentlichungsnummer: WO 2015/004280

(56) Entgegenhaltungen:
- EP-A2- 1 943 923

## Beschreibung

Die Erfindung betrifft ein modulares Möbelsystem, insbesondere ein modulares Möbelsystem zum Errichten von Regalen und anderen Präsentationsmöbeln, welches unter Verwendung einer geringen Anzahl von gleichartigen Elementen eine hohe Variabilität an zu erstellenden Möbeln gestattet.

Aus der EP 1 943 923 A2 ist ein Möbelelement mit einer Vielzahl von im Wesentlichen stangenförmigen Rahmenelementen bekannt. Die Rahmenelemente weisen die Form entweder eines ersten Rahmenelementtyps oder eines zweiten Rahmenelementtyps oder ggf. eines weiteren Rahmenelementtyps auf, wobei der erste Rahmenelementtyp an seinem ersten Ende und seinem zweiten Ende je einen stufenartig ausgeklinkten Überlappungsabschnitt aufweisen. Die Rahmenelemente des ersten Rahmenelementtyps sind miteinander und die Rahmenelemente des ersten Rahmenelementtyps und des zweiten Rahmenelementtyps sind miteinander verbunden, wobei eine Verbindung zweier Rahmenelemente des ersten Rahmenelementtyps am zweiten Ende des ersten Rahmenelements und am ersten Ende des zweiten Rahmenelements mittels einer Überlappung der jeweiligen ausgeklinkten Überlappungsabschnitte erfolgt. Außerdem beschrieben ist ein Möbel, bestehend aus einem oder mehreren miteinander verbundenen Möbelelementen.

Aus dem Stand der Technik sind unterschiedliche modulare Möbelsysteme bekannt, bei denen verschiedene Elemente aneinander befestigt werden, um ein Möbelstück zu erstellen. Nachteilig ist es jedoch, dass diese häufig eine Vielzahl von unterschiedlichen Strukturelementen aufweisen, welche in einer bestimmten Orientierung verbaut werden müssen, um ein fertiges Möbelstück zu erhalten.

Aufgabe der Erfindung ist es daher, ein verbessertes modulares Möbelsystem zu schaffen, welches eine hohe Vielseitigkeit erlaubt und einen einfachen Zusammenbau gestattet. Die Aufgabe wird erfindungsgemäß durch einen Gegenstand mit den Merkmalen des Patentanspruchs 1 gelöst. Vorteilhafte Ausgestaltungen der Erfindung ergeben sich aus den Unteransprüchen.

Der Erfindung liegt der Gedanke zugrunde, gleichartige Strukturelemente zu schaffen, die miteinander befestigt werden können, um ein Rahmengerüst oder Grundgerüst für ein Möbelstück zu schaffen. Insbesondere weist das modulare Möbelsystem gleichartige erste Tragelemente auf, welche entlang einer Längsachse langgestreckt sind und an gegenüberliegenden Stirnseiten, durch die die Längsachse verläuft, Vorsprünge aufweisen, die gegenüber der Längsachse an den Stirnseiten unterschiedlich versetzt ausgebildet sind. Beim Befestigen werden die Vorsprünge der ersten Tragelemente einander überlagert und durch ein Befestigungselement, welches durch Durchgangsöffnungen in den Vorsprüngen hindurchgreift an einem zweiten Tragelement befestigt. Ein solcher Befestigungspunkt wird hier als Knoten bezeichnet. Eine Möbelfläche des Grundgerüsts, insbesondere eine Vorderseite und/oder Rückseite, kann durch gleichartige erste Tragelemente gebildet werden. Diese sind so beschaffen, dass ein Aufbau einer solchen Gerüstfläche sukzessive fortgeführt werden kann. Unabhängig von den zuvor gebildeten Knoten, an denen sich die Vorsprünge verschiedener erster Tragelemente überlappen und gemeinsam an einem zweiten Tragelement befestigt sind, kann jeweils ein neues erstes Tragelement angebaut werden. Insbesondere wird somit ein modulares Möbelsystem, geeignet zur Bildung eines Möbelstücks, vorgeschlagen, welches umfasst: gleichartige entlang einer Längsachse langgestreckte erste Tragelemente, Befestigungselemente und gleichartige zweite Tragelemente, welche ausgebildet sind, an zwei diametral gegenüberliegenden Stirnflächen jeweils ein oder mehrere der Befestigungselemente aufzunehmen, wobei jedes der ersten Tragelemente eine Stirnseite und eine entlang der Längsachse diametral gegenüberliegende weitere Stirnseite aufweist, und wobei sich die Längsachse durch die Stirnseiten erstreckt, und jedes der ersten Tragelemente an der einen Stirnseite einen Vorsprung und an der diametral gegenüberliegenden weiteren Stirnseite einen weiteren Vorsprung aufweist, wobei jeder der Vorsprünge eine Oberseite und eine hierzu parallel orientierte Unterseite aufweist und die Oberseiten und die Unterseiten der beiden Vorsprünge ebenfalls parallel zueinander und quer zu den Stirnseiten orientiert sind, und die Vorsprünge jeweils mindestens eine sich von der Oberseite zu der Unterseite erstreckende Durchgangsöffnung aufweisen, und wobei die Vorsprünge unterschiedlich gegenüber der Längsachse versetzt ausgebildet sind, und wobei ein Möbelstück gebildet wird, indem in sogenannten Knoten jeweils Vorsprünge von verschiedenen ersten Tragelementen, überlagert werden und mindestens ein Befestigungselement jeweils durch die mindestens eine Durchgangsöffnung der überlagerten Vorsprünge geführt und in einer Stirnseite eines zweiten Tragelements arretiert wird.

Dass die Vorsprünge unterschiedlich gegenüber der Längsachse versetzt ausgebildet sind, bedeutet, dass der eine Vorsprung an der einen Stirnseite gegenüber der Längsachse einen abweichenden Versatz als der weitere Vorsprung an der diametral gegenüber liegenden Stirnseite von der Längsachse aufweist.

Es wird somit ein Grundgerüst für ein modulares Möbelstück in der Weise gebildet, sodass beispielsweise eine Vorder- und eine Rückseite durch die ersten Tragelemente gebildet wird, die an Knoten miteinander und mit zweiten Tragelementen verbunden sind, welche sich zwischen der Vorder- und der Rückseite erstrecken. Alternativ kann durch die ersten Tragelemente eine Oberseite und eine Unterseite eines Möbelstücks gebildet werden, welche durch die zweiten Tragelemente miteinander verbunden sind. Aufgrund der versetzten Anordnung der Vorsprünge an den gegenüberliegenden Stirnseiten ist es möglich, die ersten Tragelemente in unterschiedlichen Orientierungen als Kanten in die Felder einer flächigen Struktur des Grundgerüsts einzufügen.

Vorzugsweise besitzen die beiden Vorsprünge eines ersten Tragelements jeweils die Form eines geraden Prismas und die Grundflächen der die Form der Vorsprünge angebenden Prismen sind gleich, vorzugsweise rechteckig, noch bevorzugter quadratisch.

Insgesamt sind vier unterschiedliche Einbaulagen für ein erstes Tragelement als eine Seitenkante eines solchen Feldes möglich, sofern die Vorsprünge eine viereckige Grundform aufweisen. Ist die Grundform des Vorsprungs dreieckig, so gibt es für jedes Kantenelement drei verschiedene Einbaulagen. Aufgrund dieser Tatsache ist es möglich, die flächige, Felder bildende Struktur aus den ersten Tragelementen sukzessive aufzubauen. Jede ein Feld schließende Kante kann durch ein erstes Tragelement geschlossen werden, unabhängig davon, wie die ersten Tragelemente, welche die übrigen Kanten des Feldes bilden, an den anderen Knoten angeordnet sind. Werden Vorsprünge mit viereckiger Grundflächenform verwendet, so weisen die Felder eine quadratische oder rechteckige Struktur auf. Werden Vorsprünge mit dreieckiger Grundstruktur verwendet, so ergeben sich sechseckige Felder. Hierbei wird jeweils angenommen, dass die eine Kante der Grundfläche des Vorsprungs, welche an die Stirnseite angrenzt, eine Länge aufweist, die mit einer Ausdehnung der Stirnseiten entlang dieser Grundflächenkanten der Vorsprünge übereinstimmt.

Erfindungsgemäß ist vorgesehen, dass die Durchstoßpunkte der Längsachse durch die Stirnseiten des ersten Tragelements Mitten der Stirnseiten definieren, und die Vorsprünge bezüglich der Mitten der Stirnseiten der ersten Tragelemente unterschiedlich versetzt sind, wobei bei einer viereckigen Grundflächenform der Prismen der eine Vorsprung an der einen Stirnseite mit der der Mitte zugewandten Grundfläche an die Mitte angrenzt und an der gegenüberliegenden weiteren Stirnseite des Tragelements die der Mitte zugewandte Grundfläche des weiteren Vorsprungs einen Abstand zur Mitte aufweist, der der Höhe des prismenartigen einen Vorsprungs an der einen Stirnseite entspricht, und bei einer dreieckigen Grundfläche ein Vorsprung zentriert bezüglich der Mitte der einen Stirnseite ausgerichtet ist und an der gegenüberliegenden weiteren Stirnseite des Tragelements die der Mitte zugewandte Grundfläche des weiteren Vorsprungs einen Abstand zur Mitte aufweist, der einer Hälfte der Höhe des prismenartigen einen Vorsprungs an der einen Stirnseite entspricht. Diese Ausführungsformen führen zu kompakten und stabilen Grundgerüsten für Möbelstücke.

Im Folgenden wird, sofern nicht ausdrücklich auf eine andere Grundflächenform für die Prismen oder Vorsprünge hingewiesen wird, von einer quadratischen Grundflächenform der Vorsprünge ausgegangen.

Am Rand einer durch die ersten Tragelemente gebildeten flächigen Grundstruktur überlappen in einem Knoten nur drei Vorsprünge, an den Ecken sogar nur zwei Vorsprünge von ersten Tragelementen. Daher ist bei einer bevorzugten Ausführungsform vorgesehen, dass zum Ausgleich der dort "fehlenden" Vorsprünge Ausgleichselemente oder Distanzelemente vorgesehen sind. Bei einer Ausführungsform des modularen Möbelsystems umfasst das Möbelsystem Ausgleichselemente, welche Prismen mit der Form und Größe der Vorsprünge sind und ebenfalls mindestens eine Durchgangsöffnung aufweisen. In Knotenpunkten am Rand der durch die ersten Tragelemente gebildeten, flächigen Struktur wird somit ein Ausgleichselement in jedem Knoten verwendet und an den Ecken werden zwei Ausgleichselemente eingesetzt.

Weisen die unterschiedlich versetzten Vorsprünge der ersten Tragelemente eine unterschiedliche Höhe auf, wobei die Höhe eines Vorsprungs die Höhe des Prismas ist, das die Form des Vorsprungs festlegt, so sind Ausgleichselemente mit unterschiedlicher Höhe notwendig, sodass die durch die ersten Tragelemente und die Ausgleichselemente gebildete Rahmenkonstruktionen in allen Knoten dieselbe Materialstärke aufweist. Daher wird es bevorzugt, dass die beiden Vorsprünge der ersten Tragelemente jeweils dieselbe Höhe aufweisen.

Besonders bevorzugt weisen die ersten Tragelemente quer zur Längsachse einen rechteckigen Querschnitt, vorzugsweise einen quadratischen Querschnitt auf. In diesem Fall besitzt das erste Tragelement eine 4-zählige Rotationssymmetrie bezüglich der Längsachse. Insbesondere in dem Fall, dass der Querschnitt quadratisch ist, lassen sich die ersten Tragelemente unabhängig von ihrer konkreten Orientierung im unverbauten Zustand kompakt aufeinander und nebeneinander schichten, um so einen platzsparenden Transport zu ermöglichen.

Damit an den Vorsprüngen keine Absätze auftreten, ist bei einigen Ausführungsformen vorgesehen, dass eine Kante des rechteckigen Querschnitts der ersten Tragelemente eine Länge aufweist, welche mit einer Kantenlänge der Grundfläche der prismenartigen Vorsprünge übereinstimmt.

Aus denselben Gründen ist es vorteilhaft, dass einer der beiden Vorsprünge mit der von der Mitte der Stirnseite (der Längsachse) abgewandten Grundfläche bündig mit einer Außenfläche des ersten Tragelements abschließt. Dieses bietet insbesondere bei einstückig hergestellten ersten Tragelementen, bei denen die Vorsprünge durch Ausfräsungen oder andere spanabhebende Fertigungsverfahren ausgebildet werden, den Vorteil, dass eine hohe Festigkeit und optische Einheitlichkeit eines der Vorsprünge mit dem Rest des ersten Tragelements entsteht.

Insbesondere im Hinblick auf einen platzsparenden Transport im nicht zusammengebauten Zustand aber auch im Hinblick darauf, dass ein aus würfel- oder quaderförmigen Elementen gebildetes Möbelgerüst geschaffen wird, bei denen die einzelnen Kanten der Quader oder Würfel dieselbe Kantenform und Kantenstärke aufweisen, wird es bevorzugt, dass die ersten Tragelemente und die zweiten Tragelemente dieselbe Querschnittsform quer zu ihren jeweiligen Längsachsen aufweisen. Bei einer quadratischen Querschnittsform der zweiten Tragelemente, wird diese vorzugsweise so gewählt, dass diese mit der Grundfläche der viereckigen Vorsprünge übereinstimmt.

Um die Variabilität des Möbelsystems zu steigern, ist bei einer Ausführungsform vorgesehen, dass es erste Tragelemente in unterschiedlichen Längen gemessen entlang der Längsrichtung gibt. Hinsichtlich der Ausgestaltung der Vorsprünge an den Stirnseiten gleichen sich jedoch alle ersten Tragelemente unabhängig von ihrer Länge entlang der Längsrichtung. Hierdurch wird es möglich, bei einem modularen Möbelsystem mit viereckigen Vorsprüngen nicht nur quadratische Felder in der aus den ersten Tragelementen geformten Möbelfläche zu bilden, sondern auch rechteckige Felder.

Ein Möbelsystem kann ferner zweite Tragelemente in unterschiedlichen Längen gemessen entlang der Längsrichtung aufweisen. Hierdurch können beispielsweise Möbelstücke mit unterschiedlichen Tiefen hergestellt werden, wobei die zweiten Tragelemente mit ihren Längsachsen parallel zu jener Richtung eingebaut sind, in welcher die Tiefe des Möbelstücks gemessen wird.

Um die durch die ersten und zweiten Tragelemente gebildeten flächigen Felder oder flächig ausgebildete Elemente, z.B. die Seitenflächen, Rahmenflächen, Böden, Trennflächen zu schließen, ist es bei einer bevorzugten Ausführungsform des Möbelsystems vorgesehen, dass das Möbelsystem zusätzlich Halterungselemente aufweist, von denen an jedem Knoten jeweils ein Halterungselement zwischen dem zweiten Tragelement und den überlagerten Vorsprüngen oder einem alternativ eingesetzten Ausgleichselement angeordnet wird. Die Halterungselemente können unterschiedlich ausgestaltet sein, je nachdem an welchem Knoten das entsprechende Halterungselement eingefügt wird und wie die an den Knoten angrenzenden Flächen der aus den ersten und zweiten Tragelementen gebildeten Struktur bzw. die Volumenbereiche, die an den jeweiligen Knoten angrenzen, gefüllt werden sollen. Eine solche Ausgestaltung bietet den Vorteil, dass eine Befestigung von sämtlichen flächigen Elementen, wie Türen, Seitenflächen, Böden, Decken und Zwischenwänden, aber auch Schubladen, Führungen und Ähnliches, nicht unmittelbar an den ersten und zweiten Tragelementen, sondern an den Halterungselementen erfolgt, die an jedem Knoten eingefügt werden. Ist in den angrenzenden Flächen bzw. Volumina keine Befestigung von weiteren Elementen vorgesehen, so kann ein Halterungselement verwendet werden, welches dieselbe Materialstärke wie die übrigen Halterungselemente aufweist, jedoch keine für eine Befestigung von Seitenteilen, Böden, Decken, Scharnieren oder Ähnlichem ausgebildeten Strukturelemente aufweist.

Die Halterungselemente weisen bei einer bevorzugten Ausführungsform mindestens eine Aufnahme zum Aufnehmen eines Befestigungselements auf, welches das Halterungselement im eingebauten Zustand durchdringt. Um eine hohe Flexibilität und Variabilität auch nach dem Aufbau des durch die ersten und zweiten Tragelemente gebildeten rahmenartigen Gerüsts des Möbelstücks zu gewährleisten, ist die Aufnahme des Halterungselements für das Befestigungselement schlitzartig ausgebildet und zu einem Rand des Halterungselements offen, sodass das Halterungselement an einem Knoten, an dem das Befestigungselement gelockert aber nicht entfernt ist, zwischen die Stirnfläche des zweiten Tragelements und die Überlagerung der Vorsprünge der ersten Tragelemente eingefügt, zwischen diesen entfernt oder ausgetauscht werden kann.

Vorzugsweise werden die ersten Tragelemente genutzt, um horizontal oder vertikal orientiere Streben des ausgebildeten Grundgerüsts für das Möbelstück zu bilden. In einem solchen Fall wirken auf die Halterungselemente, wenn an diesem beispielsweise Böden, Türscharniere oder Ähnliches befestigt werden Kräfte, welche zu einer Rotation des Halterungselements um eine durch das, vorzugsweise als Schraube ausgebildete, Befestigungselement festgelegte Drehachse führen können. Um solche unerwünschten Rotationen im verbauten Zustand zu unterbinden, weisen bei einigen Ausführungsformen des Möbelsystems die Halterungselemente an mindestens einer Seite eine oder mehrere Erhebungen auf, welche beim Fixieren des Befestigungsmittels an dem jeweiligen Knoten, an dem das Halterungselement eingebaut ist, in die Stirnseite des zweiten Tragelements eingreift oder eingreifen, um eine Rotation des Halteelements um die durch das Befestigungselement definierte Achse zu unterbinden oder zu erschweren.

Bei einer Weiterbildung weisen die Stirnseiten der zweiten Tragelemente eine oder mehrere Vertiefungen zum Aufnehmen der Erhebung des Halterungselements auf. Insbesondere wenn die ersten und zweiten Tragelemente jedoch aus einem Holzwerkstoff, einem Kunststoffwerkstoff oder einem Holzkunststoffgemischwerkstoff gefertigt sind, können die vorzugsweise aus Metall gefertigten Halterungselemente, welche Erhebungen aufweisen, auch eine Ausbildung und Verformung solcher Vertiefungen in der Stirnseite beim Befestigen an dieser Stirnseite eindrücken.

Bei einer Weiterbildung oder alternativen Ausführungsform ist vorgesehen, dass an den Stirnflächen der zweiten Tragelemente ein oder mehrere Arretiermittel ausgebildet sind, die in einen oder mehrere Schlitze oder Ausnehmungen eines Halteelements im eingebauten Zustand eingreifen, um eine Rotation des Halteelements um eine durch das Befestigungselement definierte Achse zu unterbinden oder zu erschweren. Dementsprechend sind die Halterungselemente bei dieser Ausführungsform alternativ oder zusätzlich zu den Erhebungen mit Schlitzen oder Ausnehmungen versehen, um die Arretiermittel aufzunehmen.

Bei einer weiteren Ausführungsform des modularen Möbelsystems ist vorgesehen, dass die Befestigungselemente Schrauben sind.

Um einen Überstand der Befestigungselemente über eine Oberfläche der in dem Knoten angeordneten äußeren Grundfläche eines Vorsprungs oder eines Ausgleichselements zu vermeiden, ist bei einer Ausführungsform vorgesehen, dass die eine oder die mehreren Durchgangsöffnungen des Vorsprungs, dessen Grundfläche von der Mitte der Stirnseite des ersten Tragelements beabstandet sind, auf der von der Mitte der Stirnseite abgewandten Grundfläche eine Einsenkung zur Aufnahme eines Befestigungselementekopfes aufweisen und die eine oder die mehreren Durchgangsöffnungen eines Ausgleichselements auf einer Grundflächenseite eine Einsenkung zur Aufnahme eines Befestigungselementekopfes aufweisen. Je nach Materialstärke der Ausgleichselemente ist es möglich, dass diese auf beiden Seiten Einsenkungen zur Aufnahme des Befestigungselementekopfes aufweisen. In einem solchen Fall sind die Ausgleichselemente in beliebiger Orientierung ihrer Grundflächen einbaubar. Dies bedeutet, dass ein Ausgleichselement in einem Knoten als am weitesten beabstandetes Element von dem zweiten Tragelement eingesetzt werden kann, und ein Kopf des Befestigungselements, insbesondere ein Schraubenkopf, eingesenkt werden kann, unabhängig welche Oberfläche die Außenfläche des Knotens bildet.

Bei Ausführungsformen des Möbelsystems, bei dem Einsenkungen in den Vorsprüngen oder den Ausgleichelementen vorhanden sind, werden vorzugsweise Zylinderschrauben, verwendet. Besonderes bevorzugt werden Inbus-Zylinderschrauben verwendet, da diese sich gut auch in einer Einsenkung mit einem notwendigen Drehmoment arretieren lassen.

Bei einer Ausführungsform ohne Einsenkungen zum Aufnehmen eines Schraubenkopfes werden bevorzugt sogenannte Halbrundschrauben oder Linsenkopfschrauben eingesetzt.

Es versteht sich, dass zusätzlich jeweils Unterlegscheiben zum Einsatz kommen können.

Für den Fall, dass es nicht erwünscht ist, dass eine durch die ersten Tragelemente gebildete untere Kante der ausgebildeten flächigen Struktur unmittelbar auf einer Bodenfläche angeordnet wird, kann eine Weiterbildung des Möbelsystems vorsehen, dass dieses Fußelemente umfasst, welche an einer Stirnseite einen prismenartigen Vorsprung aufweisen, der hinsichtlich seiner Form und Positionierung an der einen Stirnseite einem der Vorsprünge eines der ersten Tragelemente entspricht und an der gegenüberliegenden Stirnseite ein variables Abstandselement aufweist. Hierdurch ist es beispielsweise möglich, ein Möbelstück auf einem unebenen Untergrund aufzustellen und an allen Aufsetzpunkten eine gleichmäßige Krafteinleitung in den Boden zu erreichen. Eine Längsachse der Füße verläuft definitionsgemäß zwischen den beiden gegenüberliegenden Stirnseiten, d. h. der Stirnseite, welche mit dem Vorsprung versehen ist und der gegenüberliegenden Stirnseite, an der das Abstandselement angeordnet ist. Es ist selbstverständlich auch möglich, Fußelemente vorzusehen, die kein variables Abstandselement aufweisen, sofern das Möbelstück auf planen, ebenen Untergrundflächen angeordnet wird. Vorzugsweise ist eine Querschnittsfläche quer zu der Längsachse der Fußelemente identisch zu der Querschnittsform der ersten und vorzugsweise ebenfalls der zweiten Tragelemente des Möbelsystems.

Bei einer bevorzugten Ausführungsform sind die ersten und zweiten Tragelemente, ggf. vorhandene Fußelemente und Ausgleichselemente aus Holz, vorzugsweise demselben Holzmaterial gefertigt. Die Befestigungselemente sowie die Halterungselemente sind hingegen vorzugsweise aus Metall, vorzugsweise aus Stahl gefertigt. Das variable Abstandselement der Fußelemente ist beispielsweise als Schraube ausgebildet, die in eine Gewindebuchse eingeschraubt ist, welche in der gegenüberliegenden Stirnfläche ausgebildet oder eingelassen ist.

Auch in die Stirnflächen der zweiten Halterungselemente sind vorzugsweise eine oder mehrere Aufnahmen für das eine oder die mehreren Befestigungselemente vorgesehen. Bei der besonders bevorzugten Ausführungsform wird in jedem Knoten genau ein Befestigungselement, insbesondere in Form einer Schraube, eingesetzt, welches mittig durch die Grundflächen der Vorsprünge und mittig in die Stirnfläche des zweiten Befestigungselements geführt ist. Dort ist vorzugsweise ein metallisches Gewinde mittels einer Gewindebuchse ausgebildet, welche in ein Sackloch der Stirnfläche eingeschraubt oder eingeschlagen ist. Ein metallisches Gewinde weist den Vorteil auf, dass eine über eine Schraube ausgebildete Arretierung mehrfach gelockert und erneut hergestellt werden kann, ohne dass dies das Gewinde oder das zweite Tragelement hinsichtlich seiner Haltbarkeit und Festigkeit beeinträchtigt.

Nachfolgend wird die Erfindung unter Bezugnahme auf Figuren näher erläutert.

Hierbei zeigen:
- Fig. 1: eine Explosionszeichnung eines mit dem modularen Möbelsystem hergestellten Möbelstücks;
- Fig. 2: eine schematische Draufsicht auf ein erstes Tragelement;
- Fig. 3: eine schematische Seitenansicht eines ersten Tragelements nach Fig. 2;
- Fig. 3a, 3b: Vergrößerungsausschnitte der an den gegenüberliegenden Stirnseiten ausgebildeten Vorsprünge;
- Fig. 4: schematische Draufsicht auf ein Ausgleichelement;
- Fig. 5: schematische Seitenansicht eines Ausgleichselements;
- Fig. 6: eine schematische Draufsicht auf ein zweites Tragelement;
- Fig. 7: vergrößerte Ansicht eines Endes der schematischen Draufsicht nach Fig. 6;
- Fig. 8: eine schematische Draufsicht auf eine Stirnfläche eines zweiten Tragelements;
- Fig. 9: schematische Explosionszeichnung eines Knotens eines Grundgerüsts;
- Fig. 10: schematische Ansicht eines Fußelements;
- Fig. 11: schematische Ansicht eines weiteren Fußelements;
- Fig. 12: schematische perspektivische Ansicht eines Halterungselements;
- Fig. 12a: schematische Vorderansicht des Halterungselements nach Fig. 12;
- Fig. 12b: schematische Draufsicht auf das Halterungselement nach Fig. 12;
- Fig. 13: schematische perspektivische Ansicht eines weiteren Halterungselements;
- Fig. 13a: schematische Vorderansicht des Halterungselements nach Fig. 13;
- Fig. 13b: schematische Draufsicht auf das Halterungselement nach Fig. 13;
- Fig. 14: schematische explosionsartige Zusammenbauzeichnung eines Knotens mit eingefügten Halterungselementen;
- Fig. 15: schematische isometrische Ansicht eines ersten Tragelements; und
- Fig. 16: eine weitere schematische Ansicht des ersten Tragelements nach Fig. 15.
- Fig. 17: eine Explosionszeichnung eines mit einem weiteren modularen Möbelsystem hergestellten Möbelstücks;
- Fig. 18: schematische Explosionszeichnung eines Knotens eines Grundgerüsts des Möbelsystems nach Fig. 17;
- Fig. 19: eine schematische Draufsicht auf ein erstes Tragelement des Möbelsystems nach Fig. 17;
- Fig. 20: eine schematische Seitenansicht eines ersten Tragelements nach Fig. 18;
- Fig. 20a, 20b: Vergrößerungsausschnitte der an den gegenüberliegenden Stirnseiten ausgebildeten Vorsprünge der Ausführungsform nach Fig. 20;
- Fig. 21: schematische Draufsicht auf eine Abdeckkappe;
- Fig. 22: schematische Seitenansicht der Abdeckkappe nach Fig. 21;
- Fig. 23: schematische Draufsicht auf ein Abstands-Halterunsgelement;
- Fig. 24a: schematische Vorderansicht noch eines Halterungselements;
- Fig. 24b: schematische Draufsicht auf das Halterungselement nach Fig. 24a;
- Fig. 25a: schematische Vorderansicht noch einesweiteren Halterungselements; und
- Fig. 25b: schematische Draufsicht auf das Halterungselement nach Fig. 25a.

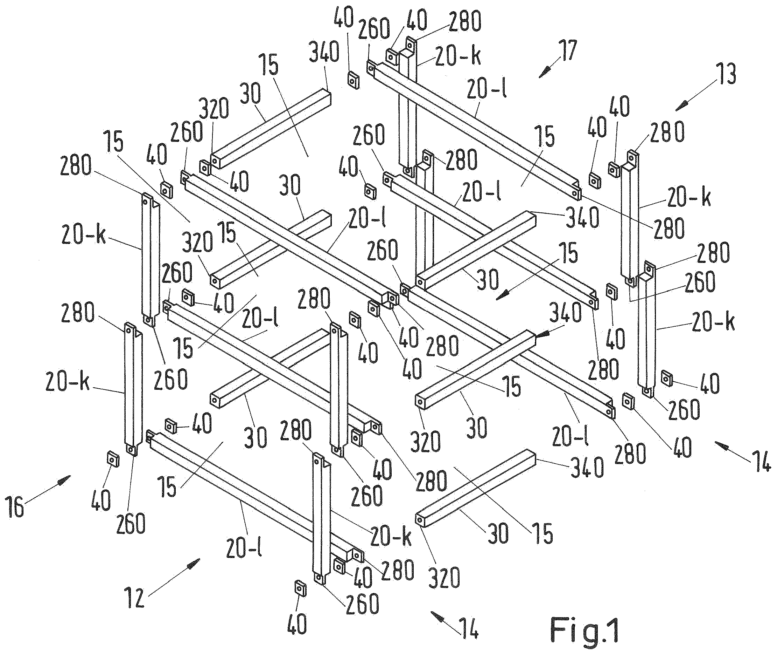

In Fig. 1 ist schematisch die Explosionszeichnung eines Möbelstücks 10 eines mit einem modularen Möbelsystem 1 hergestellten Möbelstücks 10 schematisch dargestellt. Das modulare Möbelsystem 1 umfasst erste Tragelemente 20-k, 20-I, zweite Tragelemente 30, sowie Ausgleichselemente 40. Der nachgestellte Index -k bzw. -I soll hierbei eine Länge der ersten Tragelemente andeuten. Bis auf ihre Länge entlang einer Längsachse sind die ersten Tragelemente 20-k und 20-I gleichartig ausgebildet. Aus Vereinfachungsgründen sind Befestigungselemente, welche beispielsweise als Schrauben ausgebildet sein können, in der Explosionszeichnung der Fig. 1 nicht dargestellt. Gleiche technische Elemente sind in den verschiedenen Figuren mit demselben Bezugszeichen versehen. Auch die zweiten Tragelemente 30 können in unterschiedlichen Längen in einem Möbelsystem existieren.

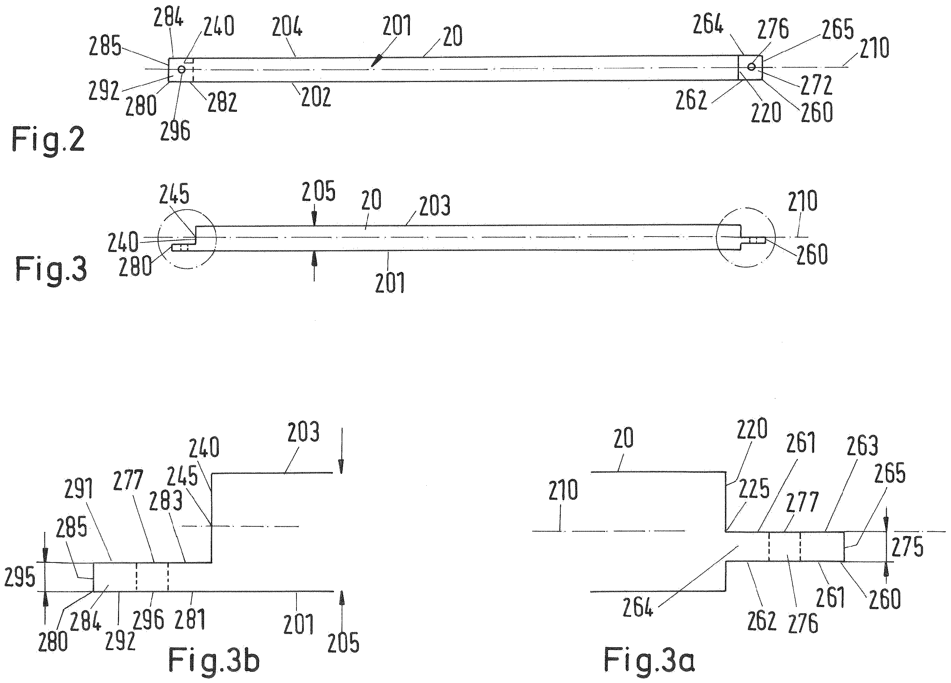

In Fig. 2 ist schematisch eine Draufsicht auf ein erstes Tragelement 20 dargestellt. Das erste Tragelement 20 weist eine Oberseite 201, eine Vorderseite 202, eine Unterseite 203 sowie eine Rückseite 204 auf. Das erste Tragelement 20 ist entlang einer Längsachse 210 langgestreckt und weist senkrecht zur Längsachse 210 eine quadratische Querschnittsform auf. Bei anderen Ausführungsformen kann die Querschnittsform auch anders gewählt sein, z. B. rechteckig oder rund. An einer Stirnseite 220 weist das erste Tragelement 20 einen Vorsprung 260 auf. An der diametral gegenüberliegenden Stirnseite 240 weist das erste Tragelement 20 einen weiteren Vorsprung 280 auf.

In Fig. 3 ist eine schematische Seitenansicht des ersten Tragelements 20 nach Fig. 2 dargestellt. Die Vorsprünge 260, 280 sind gegenüber der Längsachse 210 unterschiedlich versetzt an den Stirnseiten 220, 240 ausgebildet. Die Vorsprünge 260, 280, weisen in der dargestellten Ausführungsform jeweils eine Oberseite 261, 281, eine Unterseite 263, 283, eine Vorderseite, 262, 282, eine Rückseite 264, 284 sowie eine Stirnseite 265, 285 auf.

Wie aus Fig. 2 zu erkennen ist, weisen die an den diametral gegenüberliegenden Stirnseiten 240, 260 des ersten Tragelements 20 ausgebildeten Vorsprünge 260, 280 eine quadratische Grundfläche 271, 291 auf. Die beiden Vorsprünge 260, 280 besitzen jeweils die Form eines geraden Prismas mit einer quadratischen Grundfläche 271, 291. Bei der dargestellten Ausführungsform sind die Höhen 275, 295 der Prismen bzw. der Vorsprünge 260, 280 identisch. Dies ist gut in den Fig. 3a und 3b zu erkennen, die vergrößerte Ansichten der einen Stirnseite 220 (Fig. 3a) und der diametral gegenüberliegenden Stirnseite 240 (Fig. 3b) zeigen.

Die Höhen 275, 295 der Vorsprünge 260, 280 betragen bei dieser dargestellten Ausführungsform jeweils ein Viertel einer Kantenlänge der quadratischen Querschnittsform quer zur Längsachse 210 der ersten Tragelemente 20.

Durchstoßpunkte 222, 242 der Längsachse 210 durch die eine Stirnfläche 220 und eine diametral gegenüberliegende weitere Stirnfläche 240 definieren jeweils Mitten 225, 245 der Stirnseiten 220 bzw. 240. Bezüglich der Mitten 225, 245 sind die entsprechenden Vorsprünge 260, 280 unterschiedlich versetzt an den Stirnseiten 220, 240 ausgebildet. Während auf der einen Stirnseite 220 eine Grundfläche 272 (Unterseite 263) des Vorsprungs 260, die der Mitte 225 der einen Stirnseite 220 zugewandt ist, bündig mit der Mitte 225 und der Längsachse 210 abschließt, ist die der Mitte 245 zugewandte Grundfläche 292 (Unterseite 283) des Vorsprungs 280 an der einen Stirnseite 220 an der diametral gegenüberliegenden Stirnseite 240 um die Höhe 275 des Vorsprungs 260 von der Mitte 245 beabstandet. Bei der dargestellten Ausführungsform, bei der die Vorsprünge alle jeweils die gleiche Höhe 275, 295 aufweisen, bedeutet dies, dass der Vorsprung 280 an der weiteren Stirnseite 240 von der Mitte 245 um eben eine solche Höhe 275 von der Mitte 245 beabstandet ist.

Bei der dargestellten Ausführungsform sind der Vorsprung 260 und der Vorsprung 280 beide auf derselben Seite 218 bezogen zur Längsachse 210 ausgebildet. Ebenso sind jedoch Ausführungsformen möglich, bei denen die Vorsprünge auf entgegengesetzten Seiten 218, 219 der Längsachse 210 angeordnet sind. In jedem Fall sind jedoch die Grundflächen 271, 272, 291, 292 der eine Prismenform aufweisenden Vorsprünge 260, 280 jeweils zueinander parallel orientiert. Bei der dargestellten Ausführungsform schließt die Grundfläche 291 des weiteren Vorsprungs 280 bündig mit einer Oberseite 201 des ersten Tragelements 20 ab. Der an der einen Stirnseite 220 angeordnete Vorsprung 260 ist gegenüber der Oberseite 201 um ein Viertel der Kantenlänge der quadratischen Querschnittsform, d. h um ein Viertel des Abstands 205 zwischen der Oberseite 201 und der Unterseite 203 des ersten Tragelements 20, quer zur Längsachse 210 gegenüber der Oberseite 201 versetzt. Der weitere Vorsprung 280 an der gegenüberliegenden weiteren Stirnseite 240 schließt hingegen bündig mit der Oberseite 201 ab.

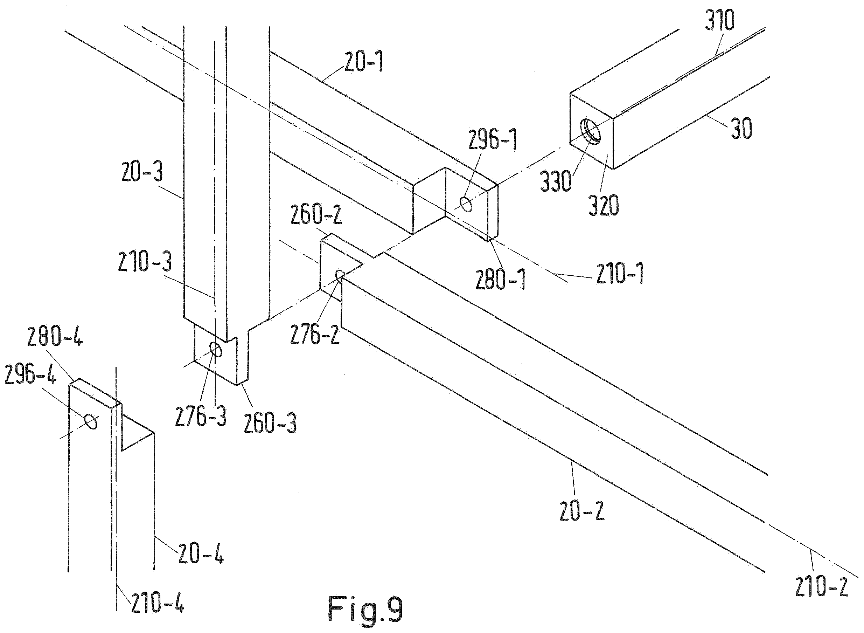

Die Vorsprünge 260, 280 weisen jeweils eine Durchgangsöffnung 276, 296 auf, welche durch einen Mittelpunkt 277 bzw. 297 der Grundflächen 271 bzw. 291 verläuft. Die Durchgangsöffnungen 276, 296 sind senkrecht zu den Grundflächen 271, 291 kreisförmig ausgeführt. Die Durchgangsöffnungen 276, 296 sind vorgesehen, von einem Befestigungselement durchdrungen zu werden, wenn bei der Montage die Vorsprünge 260, 280 verschiedener erster Tragelemente 20 einander überlagert werden. Dieses ist schematisch in Fig. 9 dargestellt, in der vier verschiedene erste Tragelemente 20-1, 20-2, 20-3, 20-4 so zueinander orientiert angeordnet sind, dass die Längsachsen 210 im zusammengesetzten Zustand ein Kreuz bilden, dessen Kreuzungspunkt in der Mitte der Durchgangsöffnungen 276-2, 276-3, 296-1, 296-4 der hier einander überlagerten Vorsprünge 280-1, 260-2, 260-3, 280-4 liegt. Die Nachstellung "-i" deutet einen Index zum Durchzählen der gleichartigen ersten Tragelemente 20-i an. Die Durchgangsöffnungen 276, 296 bilden eine gemeinsame Durchgangsöffnung, durch welche ein Befestigungselement, beispielsweise eine Schraube geführt wird und in eine Stirnseite 320 eines zweiten Tragelements 30 eingreift. Ein solcher Verbindungspunkt von bis zu vier ersten Tragelementen 20 und einem zweiten Tragelement 30 mit Hilfe mindestens eines Befestigungselements wird als Knoten 11 bezeichnet.

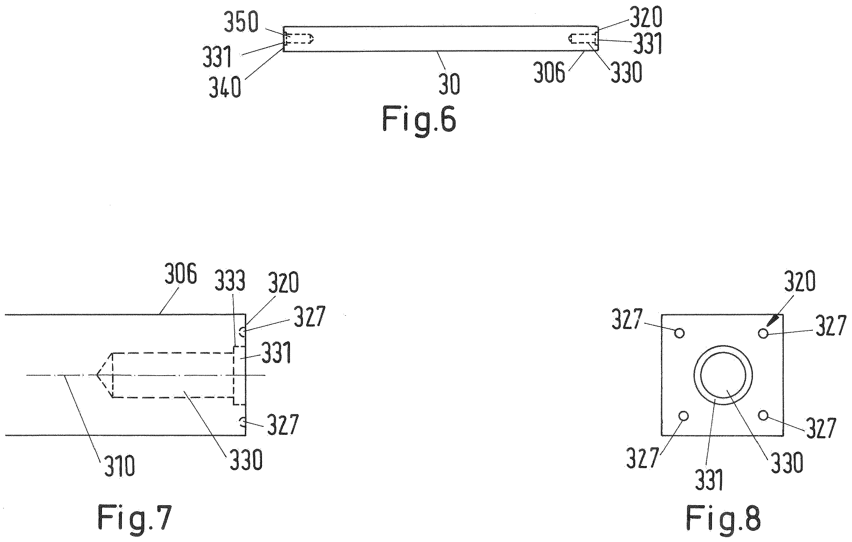

In Fig. 6 ist eine schematische Draufsicht auf ein zweites Tragelement 30 gezeigt. Das Tragelement 30 weist ebenfalls eine Längsachse 310 auf. Diese verläuft mittig durch die Stirnseite 320 und eine gegenüberliegende Stirnseite 340.

In Fig. 8 ist eine Draufsicht auf die Stirnseite 320 schematisch dargestellt. Gut zu erkennen ist der quadratische Querschnitt quer zur Längsachse 310, welche sich durch einen Mittelpunkt 325 der Stirnseite 320 des zweiten Tragelements 30 senkrecht zur Darstellungsebene erstreckt. Jeweils zentriert zu der Längsachse 310 sind in den Stirnseiten 320 und 340 Sacklöcher 330, 350 ausgeführt.

In Fig. 7 ist eine vergrößerte Ansicht eines Endes 306 mit der einen Stirnseite 320 vergrößert dargestellt. Gut zu erkennen ist, dass in die Stirnseite 320 zusätzlich eine, häufig als Rampa-Muffe bezeichnete, Einschraubmutter 331 eingeschraubt ist, welche an einer Außenseite 333 ein Holzaußengewinde und an einer Innenseite ein metrisches Gewinde oder ein zölliges Gewinde aufweist. Solche Einschraubmuttern werden auch als Gewindebuchse bezeichnet. Die zweiten Tragelemente sind an ihren diametral gegenüberliegenden Stirnseiten 320, 340 in der Regel identisch ausgebildet.

Vorzugsweise ist die Querschnittsform sowie eine Größe der Querschnittsfläche identisch zur Querschnittsform der ersten Tragelemente 20 und Querschnittsgröße der ersten Tragelemente 20 ausgebildet. Beispielsweise sind die ersten Tragelemente 20 und die zweiten Tragelemente 30 aus einem Holzwerkstoff vorzugsweise aus Vollholz hergestellt.

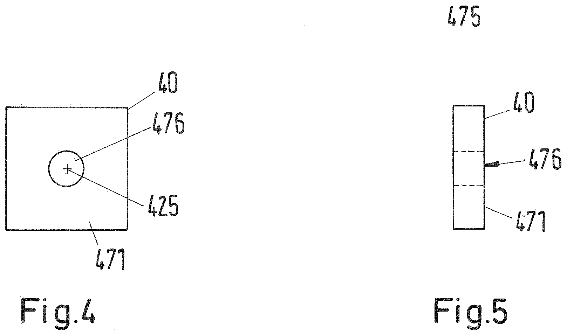

In Fig. 4 ist eine Draufsicht auf ein Ausgleichelement 40 gezeigt. Zu erkennen ist, dass eine Grundfläche 471 mit den Grundflächen 271, 272, 291, 292 der Vorsprünge 260, 280 der ersten Tragelemente 20 und vorzugsweise auch der Stirnseite 320 der zweiten Tagelemente korrespondiert. In einer Mitte 425 ist eine Durchgangsöffnung 476 analog zu den Durchgangsöffnungen 276, 296 der Vorsprünge 260, 280 der ersten Tragelemente 20 ausgebildet. eine Höhe 475 entspricht den Höhen 275 und 295 der Vorsprünge 260, 280 der ersten Tragelemente 20. In Fig. 5 ist eine Seitenansicht des Ausgleichselements 40 gezeigt.

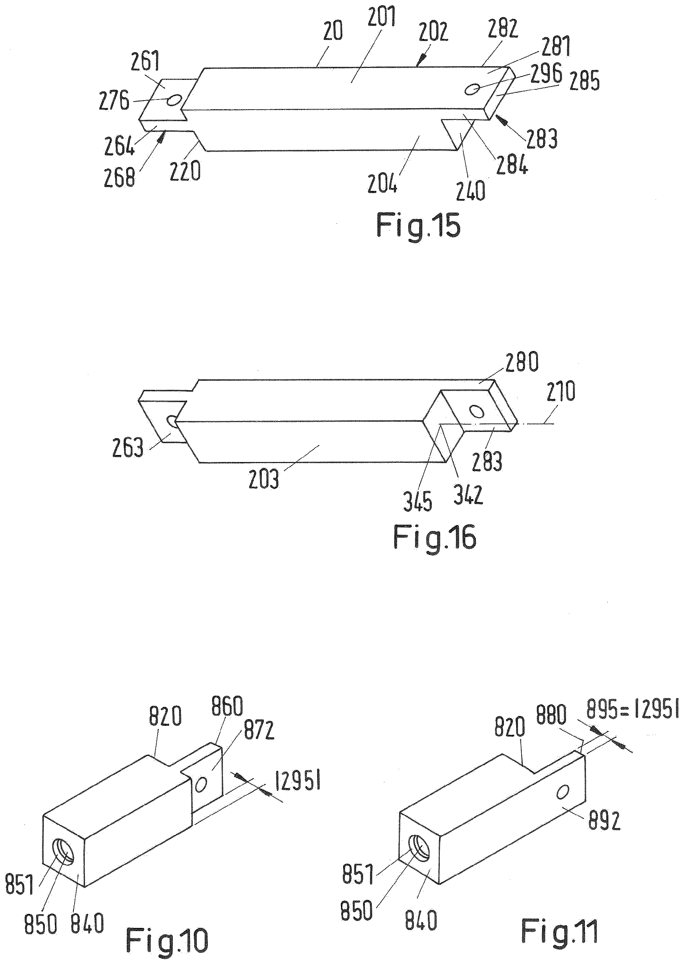

In Figuren 15 und 16 sind noch einmal zwei perspektivische Ansichten eines ersten Tragelements 20 schematisch in zwei unterschiedlichen isometrischen Ansichten dargestellt. Dieselben technischen Merkmale sind mit denselben Bezugszeichen versehen, sodass die einzelnen Merkmale nicht noch einmal ausführlich erläutert sind.

Während bei dem Möbelstück 10, dessen Explosionszeichnung in Fig. 1 gezeigt ist, keine Füße vorgesehen sind, ist es möglich, Fußelemente 80, 81 vorzusehen, wie sie beispielsweise in Fig. 10 und 11 in zwei unterschiedlichen Ausführungsformen gezeigt sind. Die Fußelemente 80, 81 weisen an einer Stirnseite 820 jeweils einen Vorsprung 860 bzw. 880 auf, welcher hinsichtlich seiner Form, Ausgestaltung und Anordnung der eines der Vorsprünge 260 bzw. 280 eines ersten Tragelements 20 entspricht. Möglich sind zwei unterschiedliche Ausgestaltungen. Eine Ausgestaltung, welche in Fig. 11 dargestellt ist, bei der der Vorsprung 280 mit einer Grundfläche 892 bündig mit einer Oberseite 801 des Fußelements 80 abschließt oder ein anderes Fußelement 81, bei dem der Vorsprung 860 an der Stirnseite 820 mit seiner Grundfläche 872 gegenüber der Oberseite 801 um eine Höhe 295 des Vorsprungs 280 versetzt ist. Allgemein wird der Versatz jedoch gegenüber der Längsachse 810 oder der Mitte 825 der Stirnseite festgelegt.

An der gegenüberliegenden Stirnseite 840 weisen die Fußelemente einer dargestellten Ausführungsform, eine Ausgestaltung ähnlich zu der der Stirnseite 320 der zweiten Tragelemente 30 auf. Mittig ist ein Sackloch 850 ausgebildet, in welches erneut eine Einschraubmutter 851 eingelassen ist, sodass über Schrauben mit einem vergrößerten Kopf (nicht dargestellt), welcher als Standfläche dient, eine variable Höhenanpassung möglich ist.

Die Fußelemente 80, 81 können an einem Möbelstück 10 ähnlich zu dem nach Fig. 1 an Stelle von Ausgleichselementen in die Knoten 11 eingefügt werden, welche an der Unterseite 12 des Möbelstücks 10 angeordnet sind.

Das in Fig. 1 dargestellte Möbelstück 10 besteht in der Ausführungsform nach Fig. 1 aus einem rahmenartigen Grundgerüst 13, wobei die Außenfläche 14 in rechteckige oder quadratische Felder 15 unterteilt ist. Auch im Innern treten rechteckige oder quadratische Felder 15 auf, welche mit Böden, Decken, Seitenwänden, Türelementen oder ggf. einzufügenden Auszügen geschlossen bzw. gefüllt werden können. Um solche zusätzlichen Elemente an dem durch die ersten Tragelemente 20 und zweiten Tragelemente 30 gebildeten Grundgerüst 13 oder Rahmengerüst anordnen zu können, ist bei einer Weiterbildung vorgesehen, dass jeweils zwischen die Stirnflächen 320, 340 der zweiten Tragelemente 30 und die Vorsprünge 280 der ersten Tragelemente 20 oder ein Ausgleichselement 40 vorzugsweise aus Metall ausgebildete dünne Halterungselemente (nicht dargestellt) eingefügt werden. Diese weisen Strukturelemente auf, an denen Seitenwandflächen, Böden, Decken, Rückwandelemente oder Scharniere oder Züge für Schubladen oder Ähnliches befestigt werden können. Die Halterungselemente können je nach Bedarf unterschiedlich ausgestaltet sein.

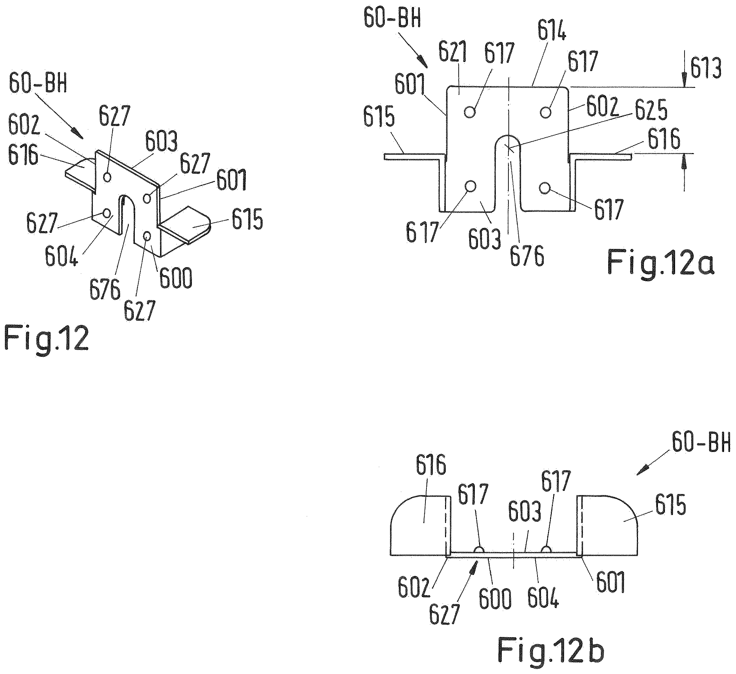

In Fig. 12 ist ein Halterungselement 60-BH für eine Auflagefläche eines Bodens in isometrischer Ansicht gezeigt. Dieses ist vorzugsweise aus Metall gefertigt und weist eine quadratische Grundplatte 600 auf, welche eine schlitzartige Ausnehmung 676 aufweist und ausgebildet ist, das Befestigungselement aufzunehmen, wenn die Grundplatte 600 des Halterungselements 60-BH zwischen die Stirnseite 320 eines zweiten Tragelements 30 und einen weiteren Vorsprung 280 eines ersten Tragelements 20 oder ein Ausgleichselement 40 montiert wird. An gegenüberliegenden Seiten 601, 602 weist das Halterungselement 60 Auflageflächen 615, 616 auf, auf die beispielsweise Böden aufgelagert werden können. Die Nachstellung "-BH", wie auch andere im Folgenden verwendete Nachstellungen, deuten den funktionalen Zweck eines Halterungselements 60 an.

In Fig. 12a ist eine Vorderansicht des Halterungselements 60-BH nach Fig. 12 gezeigt. Mittig ist die schlitzartige Ausnehmung 676 zu erkennen. Bei dieser Ansicht sind auf einer Vorderseite 603 der Grundplatte 600 vier Erhebungen 617 zu erkennen. Die Anordnung der Erhebungen 617 weist bezüglich einer Mitte 625 einer Grundfläche 621 eine vierfache Rotationssymmetrie auf.

In Fig. 12b ist eine schematische Draufsicht auf ein Halterungselement 60-HB gezeigt. Rechts und links sind die für die Auflage vorgesehenen Auflageflächen 615, 616 zu erkennen. Zusätzlich sind auf einer Seite der quadratischen Grundplatte 600 die Erhebungen 617 zu erkennen, welche bei einem Befestigen des Halterungselements an der Stirnseite 320 eines zweiten Tragelements 30 in die Stirnseite 320 eingreifen. Die Stirnseite 320 eines zweiten Tragelements 30 kann hierfür beispielsweise vorgesehene Ausnehmungen oder Vertiefungen 327 aufweisen.

Alternativ könnten die Erhebungen 617 auch in die Oberseite 281 eines Vorsprungs 280 eines ersten Tragelements 20 oder ein Ausgleichselement 40 eindringen und/oder in entsprechende Vertiefungen in der Oberseite 281 des Vorsprungs 280 oder in einem Ausgleichselement, wobei die Vertiefungen ähnlich zu denen der Stirnseite 320 der zweiten Tragelemente 30 ausgebildet sind.

Die Vorsprünge 617 und Vertiefungen 327 sind optional. Ebenso können mit den Erhebungen 617 korrespondierende Vertiefungen 627 in einer Rückseite 604 der Grundplatte ausgebildet sein, um Erhebungen eines anderen Halterungselements 60 aufnehmen zu können.

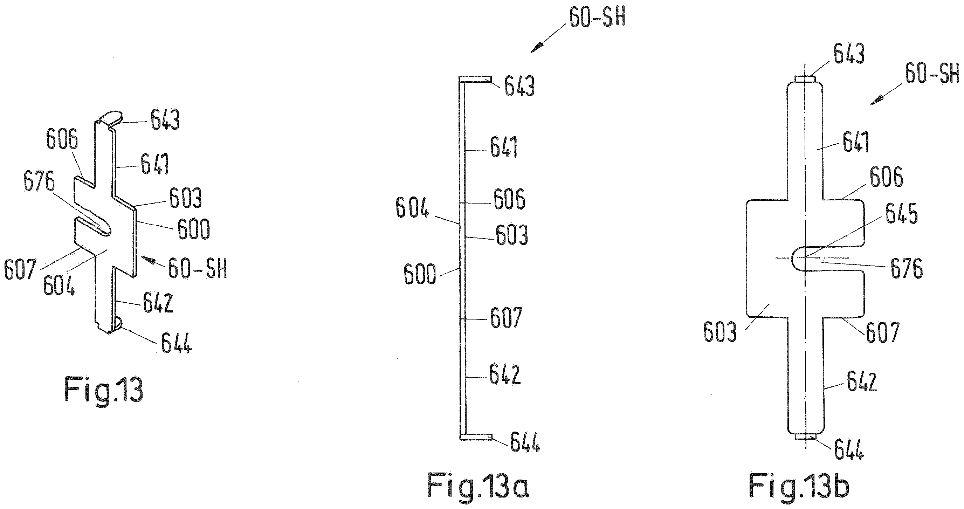

In Fig. 13 ist eine schematische isometrische Ansicht eines weiteren Halterungselements 60-SH zum Befestigen eines Seitenwandelements gezeigt. Auch dieses Halterungselement 60-SH weist eine Grundplatte 600 mit einer schlitzartigen Ausnutzung 676 auf. Auch hinsichtlich optionaler Erhebungen und Vertiefungen zum Aufnehmen von Erhebungen eines anderen Halterungselements ist dieses Halterungselement 60-SH analog ausgebildet. Die Erhebungen und Ausnehmungen sind bei dieser Ausführungsform aus Gründen der Vereinfachung nicht gezeigt.

Von der Grundplatte 600 kragen an gegenüberliegenden Kanten 606, 607 der Grundplatte 600 zwei Arme 641, 642 aus, deren Enden jeweils einen zur Vorderseite 603 der Grundplatte 600 abgewinkelten Vorsprung 643, 644 aufweisen.

Während der Einbau des Halterungselements 60-HB nach Fig. 12, Fig. 12a, Fig. 12b so erfolgt, dass die schlitzartige Ausnehmung 676 vertikal orientiert und nach unten offen ist, erfolgt der Einbau des Halterungselements 60-SH nach Fig. 13, 13a, 13b so, dass die schlitzartige Ausnehmung 676 horizontal orientiert ist.

Das Halterungselement 60-HB nach Fig. 12, 12a, 12b ist z.B. zum Auflagern eines Bodens aus Holz vorgesehen. Das Halterungselement 60-SH ist hingegen geeignet, Seitenwände aus Holz zu halten, wobei die Vorsprünge 643, 644 in Ausnehmungen von Seitenwänden eingreifen.

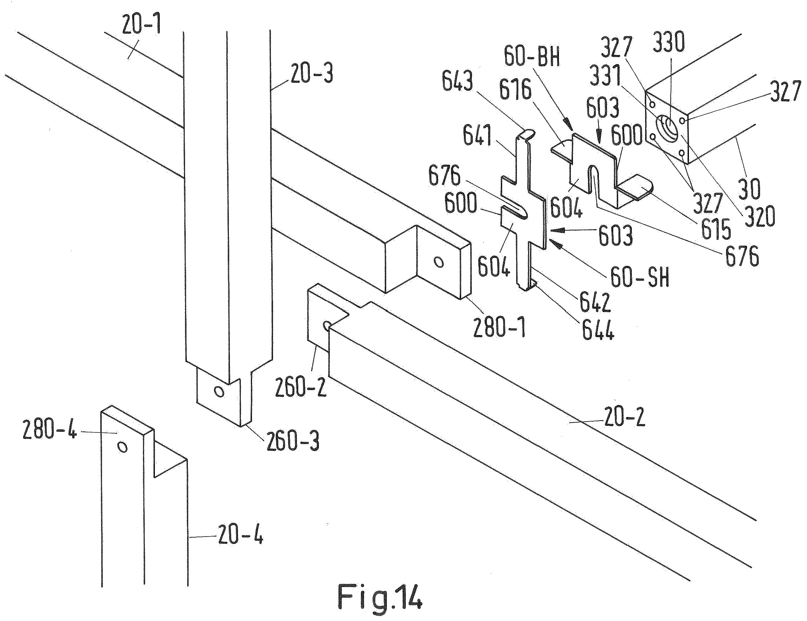

In Fig. 14 ist eine Explosionszeichnung eines so zusammengefügten Knotens 11 in perspektivischer Ansicht schematisch gezeigt.

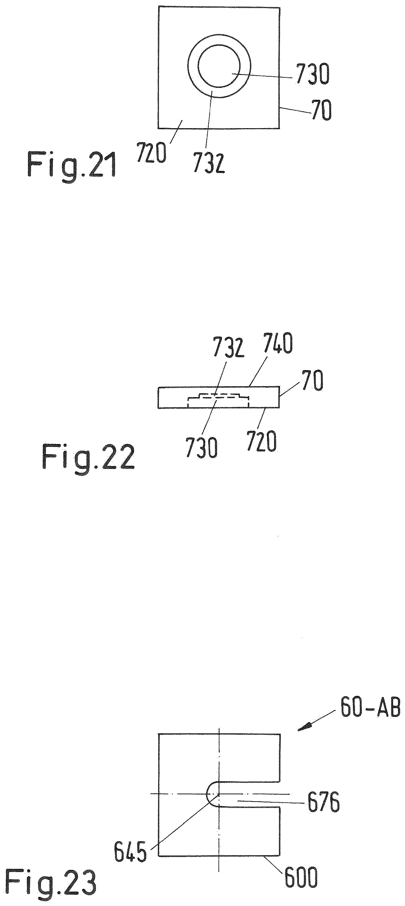

Bei dieser Ausführungsform eines Möbelstücks werden in jedem Knoten 11 zwei Halterungselemente 60 verbaut. Sollen in einem an den Knoten angrenzenden Feld 15 (vergleiche auch Fig. 1) keine zusätzlichen Elemente eingefügt werden, so können statt der gezeigten Halterungselemente 60-BH, 60-SH ein oder mehrere Abstands-Halterungselemente 60-AB verwendet werden. Ein solches ist schematisch in Fig. 23 gezeigt. Die Grundplatte 600 weist dieselbe Form und Materialstärke senkrecht zur Zeichnungsebene auf wie die Grundplatten 600 der übrigen Halterungselemente 60. Auch die schlitzartige Aussparung 676 ist analog ausgebildet.

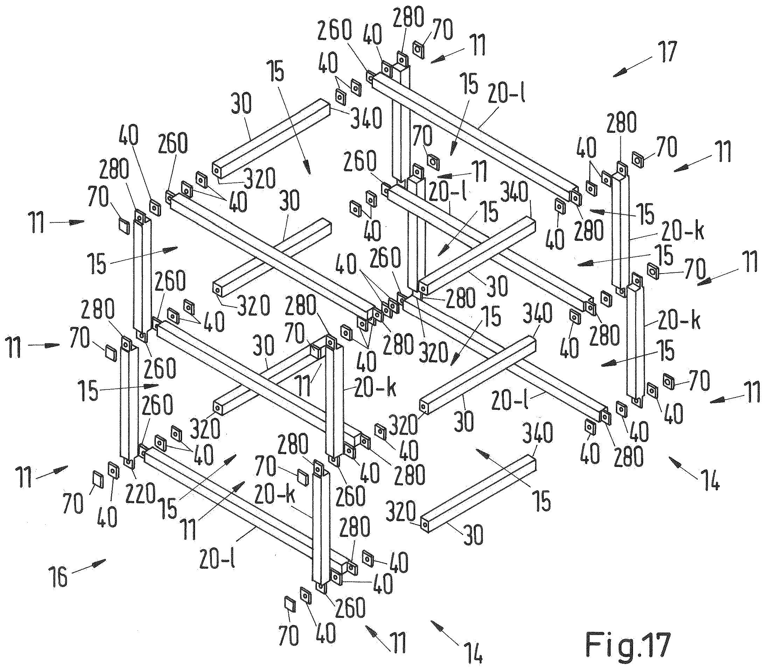

In einem Knoten 11 können hier ein, zwei oder mehr Halterungselemente 60 angeordnet werden. In der Regel ist in allen Knoten 11 einer aus ersten Tragelementen 20 gebildete Außenfläche 14 eines Möbelstücks 10 (vergleiche Fig. 1 oder 17) dieselbe Anzahl von Halterungselementen 60 verbaut. Die Anzahl der Halterungselemente 60 in Knoten 11 einer Vorderseite 16 kann sich von einer Anzahl der Halterungselemente 60 an einer Rückseite 17 des Möbelstücks unterscheiden.

Es wird hier erneut darauf hingewiesen, dass in Fig. 1 und 17 aus Gründen der Vereinfachung gar keine Halterungselemente gezeigt sind.

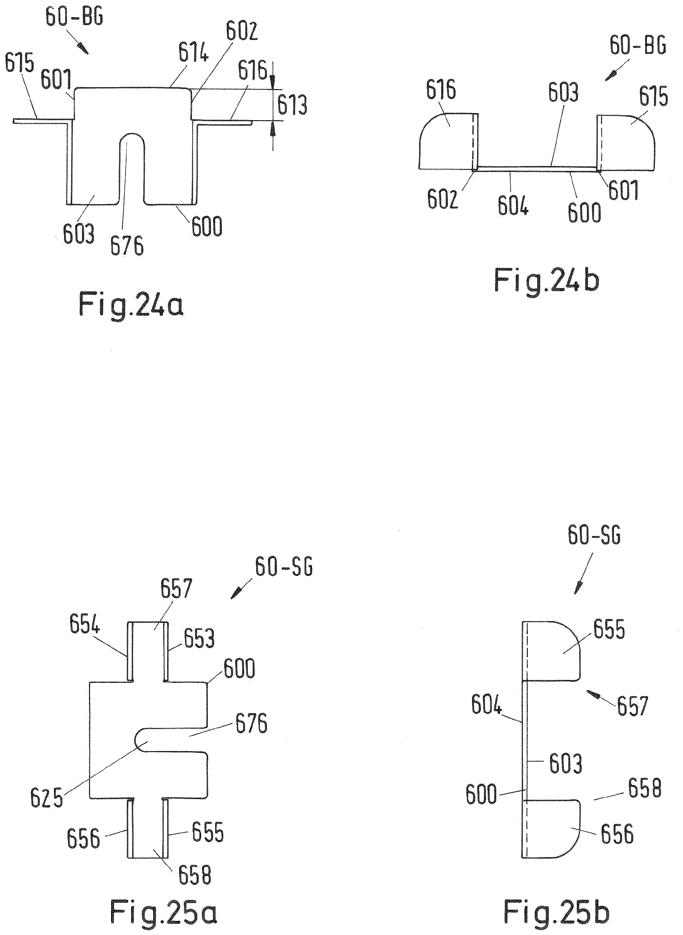

In Figuren 24a und 24b sind schematisch die Vorderansicht und die Draufsicht auf ein Halterungselement 60-BG gezeigt, welches dem Halterungselement 60-BH nach Fig. 12, 12a, 12b ähnlich ist.

Das Halterungselement 60-BH unterscheidet sich von dem Halterungselement 60-BG dadurch, dass die Auflageflächen 615, 616 des Halterungselements 60-BH einen größeren Abstand 613 von einer Oberkante 614 der Grundplatte 600 aufweisen als bei dem Halterungselement 60-BG nach Fig. 24a, 24b. Die Ursache hierfür sind unterschiedliche Materialstärken der aufzulagernden Böden, welche beispielsweise aus Holz und Glas sind. Hierdurch kann eine einheitliche Oberseite der Böden in unterschiedlichen Feldern 15 (vergleiche Fig. 1 und 17) erreicht werden, wenn diese aus unterschiedlichen Materialien und mit unterschiedlichen Materialstärken gefertigt sind.

Die Fig. 25a und 25b zeigen ein Halterungselement 60-SG. Dieses unterscheidet sich von den Halterungselementen 60-BH und 60-BG dadurch, dass jeweils an jeder Seite ein Paar Führungsvorsprünge 653, 654, 655, 656 vorgesehen ist, die die Nuten 657, 658 begrenzen.

Dieses Halterungselement 60-SG ist für die Halterung von Seitenwänden aus Glas vorgesehen, die in den Nuten 557, 558 geführt werden. Ein Einbau in einen Knoten erfolgt vorzugsweise so, dass die schlitzartige Aussparung im Möbelstück horizontal orientiert ist.

In den Figuren 17, 18, 19, 20, 20a, 20b, 21 und 22 sind die verschiedenen Elemente einer anderen Ausführungsform eines modularen Möbelsystems 1 gezeigt. Diese Ausführungsform unterscheidet sich im Wesentlichen dadurch, dass Höhen 275, 295 der Vorsprünge 260, 280 der ersten Tragelemente dieser Ausführungsform nicht einem Viertel des Abstands 205 zwischen der Oberseite 201 und der Unterseite 203 des ersten Tragelements 20, wie bei der Ausführungsform der Figuren 1 bis 16, sondern einem Sechstel dieses Abstands 205 entsprechen. Wie aus Fig. 17 zu entnehmen ist, kann zwischen die überlagerten Vorsprünge 280-1, 260-2, 260-3, 280-4 der ersten Tragelemente 20-1 bis 20-4 und die Stirnseite 320 des zweiten Tragelements ein Ausgleichselement 40 eingefügt werden. Ferner kann eine Abdeckkappe 70 anstelle eines weiteren Ausgleichselements als Abschluss eines Knotens 11 verwendet werden, welche ein Sackloch zum Aufnehmen eines Kopfes eines Befestigungselements aufweist.

Die Abdeckkappe 70 kann z.B. mittels eines Klebers angebracht werden oder eine Klemmvorrichtung in dem Sackloch aufweisen, um auf ein Befestigungselement geklemmt oder aufgerastet zu werden. Eine Draufsicht auf eine Abdeckkappe 70 und eine Seitenansicht sind schematisch in Fig. 21 und 22 gezeigt.

Die Abdeckkappe 70 weist bei der in Fig. 21 und 22 dargestellten Ausführungsform in einer Stirnseite 720 ein Sackloch 730 auf, in welches ein Magnet 732 eingelassen, beispielsweise eingeklebt, ist. Eine Tiefe des Sacklochs 730 und eine Materialstärke des Magnets 732 sind so an die verwendeten Befestigungselemente angepasst, dass der Magnet 732 über eine magnetische Kraft, welche zwischen dem Magnet 732 und dem Befestigungselement, beispielsweise einem Kopf des Befestigungselements, wirkt, die Abdeckkappe 70 in dem Knoten 11 (vergleiche Fig. 17) arretiert gehalten wird. Eine der Stirnseite 720 gegenüberliegende Stirnseite 740 schließt bei der Ausführungsform nach Fig. 17 jeweils bündig mit einer Oberseite 201 und/oder einer Unterseite 203 der an dem Knoten angrenzenden ersten Tragelemente 20 ab.

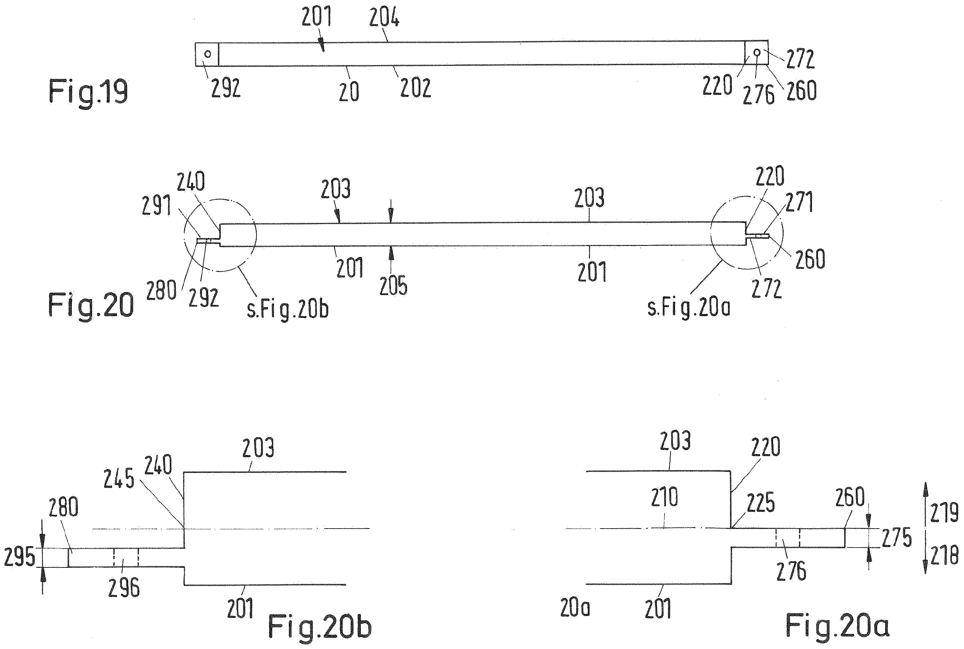

Ein erstes Tragelement dieser Ausführungsform ist in Fig. 19, 20, 20a und 20b genauer gezeigt. Gleiche Merkmale sind mit identischen Bezugszeichen versehen. Die zweiten Tragelemente 30 sind identisch zu denen der ersten Ausführungsform. Erneut können in einem Möbelsystem zweite Tragelemente 30 mit unterschiedlichen Längen vorgesehen sein. Fußelemente sind für diese Ausführungsform nicht explizit gezeigt. Es ergibt sich jedoch für den Fachmann, dass die Anordnung der Vorsprünge auf der einen Stirnseite analog zu den Vorsprüngen der ersten Tragelemente dieser Ausführungsform vorgenommen werden muss.

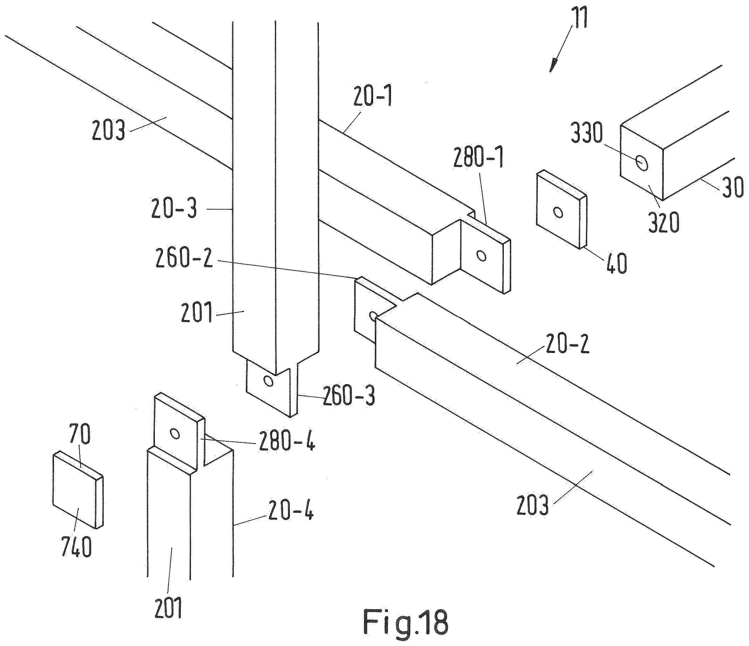

In Fig. 18 ist eine vergrößerte Explosionszeichnung eines Knotens 11 dargestellt. Das Ausgleichelement 40 zwischen den überlagerten Vorsprüngen 280-1, 260-2, 260-3, 280-4 und der Stirnseite 320 des zweiten Tragelements 30 kann jedoch auch weggelassen werden, wenn eine Querschnittsfläche der Stirnseite 320 des zweiten Tragelements 30 an die Grundfläche 292 des Vorsprungs 280 angepasst ist oder mit dieser übereinstimmt. In diesem Fall wird das zweite Tragelement formschlüssig gegen eine Rotation um die eigene Längsachse 310 im eingebauten Zustand gesichert. Dieses bedeutet, dass immer dann, wenn eine Summe der Höhen 275, 295 des einen Vorsprungs 260 und des weiteren Vorsprungs 280, die nicht identisch sein müssen, geringer als die Hälfte eines Abstands 205 der Oberseite 201 des ersten Tragelements 20 von der Unterseite 203 des ersten Tragelements 20 ist, und keiner der Vorsprünge 260, 280 bündig mit der Oberseite oder der Unterseite ausgebildet ist, beim Zusammenbau in jedem Knoten eine Aussparung zwischen den Stirnflächen 220, 240 der verschiedenen ersten Tragelemente entsteht, in welchen das zweite Tragelement, wenn dessen Querschnittsfläche kleiner oder vorzugsweise angepasst und gleich mit einer Form und Größe der Grundflächen 271, 272, 291, 292 der Vorsprünge 260, 280 ist, eingefügt werden kann. Die Seitenflächen 301, 302, 303,304 des zweiten Tragelements liegen jeweils teilflächig an einer der Stirnseite 220, 240 an. Alternativ kann aber auch ein Ausgleichselement 40 verwendet werden.

Erneut sind vorzugsweise Halterungselemente wie bei der anderen Ausführungsform zum Anbringen von weiteren Elementen, die flächige Felder 15 des erzeugten Grundgerüsts 13 des Möbelstücks 10 füllen, vorgesehen und aus Vereinfachungsgründen nicht gezeigt.

Alternativ können solche Elemente auch direkt an den ersten und zweiten Tragelemente befestigt werden, insbesondere wenn die Tragelemente 20, 30 aus einem Holzmaterial gefertigt sind.

### Bezugszeichenliste

- 1: Möbelsystem
- 10: Möbelstück
- 11: Knoten
- 12: Unterseite
- 13: Grundgerüst
- 14: Außenfläche
- 15: Felder
- 16: Vorderseite
- 17: Rückseite
- 20: erstes Tragelement
- 30: zweites Tragelement
- 40: Ausgleichselement
- 50: Befestigungselement
- 70: Abdeckkappe
- 80, 81: Fußelemente
- 201: Oberseite
- 202: Vorderseite
- 203: Unterseite
- 204: Rückseite
- 205: Abstand Oberseite - Unterseite
- 210: Längsachse
- 218: eine Seite
- 219: andere Seite
- 220: eine Stirnseite
- 222: Durchstoßpunkt
- 225: Mitte
- 240: eine weitere Stirnseite
- 242: Durchstoßpunkt
- 245: Mitte
- 260: ein Vorsprung
- 261: Oberseite (des Vorsprungs)
- 262: Vorderseite (des Vorsprungs)
- 263: Unterseite (des Vorsprungs)
- 264: Rückseite (des Vorsprungs)
- 265: Stirnseite (des Vorsprungs)
- 271, 272: eine Grundfläche
- 275: Höhe
- 276: Durchgangsöffnung
- 277: Mittelpunkt
- 280: ein weiterer Vorsprung
- 281: Oberseite (des weiteren Vorsprungs)
- 282: Vorderseite (des weiteren Vorsprungs)
- 283: Unterseite (des weiteren Vorsprungs)
- 284: Rückseite (des weiteren Vorsprungs)
- 285: Stirnseite (des weiteren Vorsprungs)
- 291, 292: eine Grundfläche
- 275, 295: Höhen
- 295: Höhe
- 296: Durchgangsöffnung
- 297: Mittelpunkt
- 306: Ende des zweiten Tragelements
- 320: Stirnseite (zweites Tragelement)
- 327: Vertiefungen
- 330: Sackloch
- 331: Einschraubmutter
- 333: Außenseite
- 340: Stirnseite (zweites Tragelement)
- 350: Sackloch
- 351: Einschraubmutter
- 600: Grundplatte
- 601, 602: Seiten
- 603: Vorderseite
- 604: Rückseite
- 606, 607: Kanten
- 613: Abstand
- 614: Oberkante
- 615, 616: Auflageflächen
- 617: Erhebungen
- 621: Grundfläche
- 625: Mitte
- 627: Vertiefungen
- 641, 642: Arme
- 643, 644: Vorsprünge
- 653, 654, 655, 656: Führungsvorsprünge
- 657, 658: Nuten
- 676: Ausnehmung
- 720: Stirnseite
- 730: Sackloch
- 732: Magnet
- 810: Längsachse
- 820: Stirnseite
- 825: Mitte
- 840: Stirnseite
- 850: Sackloch
- 851: Einschraubmutter
- 860: Vorsprung
- 872: Grundfläche
- 880: Vorsprung
- 892: Grundfläche
- 895: Höhe

## Patentansprüche

1. Modulares Möbelsystem (1), geeignet zur Bildung eines Möbelstücks (10), umfassend gleichartige entlang einer Längsachse (210) langgestreckte erste Tragelemente (20),
Befestigungselemente
und gleichartige zweite Tragelemente (30), welche ausgebildet sind, an zwei diametral gegenüberliegenden Stirnflächen (320, 340) jeweils ein oder mehrere der Befestigungselemente aufzunehmen,
wobei jedes der ersten Tragelemente (20)
eine Stirnseite (220) und eine entlang der Längsachse (210) diametral gegenüberliegende weitere Stirnseite (240) aufweist, und
wobei sich die Längsachse (210) durch die Stirnseiten (220, 240) erstreckt, und jedes der ersten Tragelemente (20) an der einen Stirnseite (220) einen Vorsprung (260) und an der diametral gegenüberliegenden weiteren Stirnseite (240) einen weiteren Vorsprung (280) aufweist,
wobei jeder der Vorsprünge (260, 280) eine Oberseite (261, 281) und eine hierzu parallel orientierte Unterseite (263, 283) aufweist und die Oberseiten (261, 281) und die Unterseiten (263, 283) der beiden Vorsprünge (260, 280) ebenfalls parallel zueinander und quer zu den Stirnseiten (220, 240) orientiert sind,
und die Vorsprünge (260, 280) jeweils mindestens eine sich von der Oberseite (261, 281) zu der Unterseite (263, 283) erstreckende Durchgangsöffnung (276, 296) aufweisen, und
wobei die Vorsprünge (260, 280) unterschiedlich gegenüber der Längsachse (210) versetzt ausgebildet sind, wobei der eine Vorsprung (260) an der einen Stirnseite (220) gegenüber der Längsachse (210) einen abweichenden Versatz als der weitere Vorsprung (280) an der diametral gegenüber liegenden Stirnseite (240) von der Längsachse (210) aufweist,
und wobei ein Möbelstück (10) gebildet wird, indem in sogenannten Knoten (11) jeweils Vorsprünge (260, 280) von verschiedenen ersten Tragelementen (20-i), überlagert werden und mindestens ein Befestigungselement jeweils durch die mindestens eine Durchgangsöffnung der überlagerten Vorsprünge (260, 280) geführt und in einer Stirnseite (320) eines zweiten Tragelements (30) arretiert wird,
und wobei Durchstoßpunkte (222, 242) der Längsachse (210) durch die Stirnseiten (220, 240) des ersten Tragelements (20) Mitten (225, 245) der Stirnseiten (220, 240) definieren, und
die Vorsprünge (260, 280) bezüglich der Mitten (225, 245) der Stirnseiten (220, 240) der ersten Tragelemente (20) unterschiedlich versetzt sind, wobei bei einer viereckigen Grundflächenform der Prismen der eine Vorsprung (260) an der einen Stirnseite (220) mit der der Mitte (225) zugewandten Grundfläche (271) an die Mitte (225) angrenzt und an der gegenüberliegenden weiteren Stirnseite (240) des ersten Tragelements (20) die der Mitte (245) zugewandte Grundfläche (291) des weiteren Vorsprungs (280) einen Abstand zur Mitte aufweist, der der Höhe (275) des prismenartigen einen Vorsprungs (260) an der einen Stirnseite (220) entspricht,
und bei einer dreieckigen Grundfläche ein Vorsprung zentriert bezüglich der Mitte der einen Stirnseite ausgerichtet ist und an der gegenüberliegenden weiteren Stirnseite des Tragelements die der Mitte zugewandte Grundfläche des weiteren Vorsprungs einen Abstand zur Mitte aufweist, der einer Hälfte der Höhe des prismenartigen einen Vorsprungs an der einen Stirnseite entspricht.

2. Modulares Möbelsystem (1) nach Anspruch 1, **dadurch gekennzeichnet, dass** die beiden Vorsprünge (260, 280) jeweils die Form eines geraden Prismas besitzen, und die Grundflächen (271, 272, 291, 292) der die Form der Vorsprünge (260, 280) angebenden Prismen gleich, vorzugsweise quadratisch, sind.

3. Modulares Möbelsystem (1) nach Anspruch 1 bis 2, **dadurch gekennzeichnet, dass** die Vorsprünge eines jeden der ersten Tragelemente jeweils dieselbe Höhe aufweisen.

4. Modulares Möbelsystem (1) nach Anspruch 1 bis 3, **dadurch gekennzeichnet, dass** die Längeachse des ersten Tragelements, sofern die Vorsprünge (260, 280) und gegebenenfalls vorhandene Oberflächenornamente nicht berücksichtigt werden, eine Hauptträgheitsachse des ersten Tragelements und/oder eine Symmetrieachse einer mehrzähligen Rotationssymmetrie um die Längsachse (210) des ersten Tragelements (20) ist.

5. Modulares Möbelsystem (1) nach einem der vorangehenden Ansprüche, **dadurch gekennzeichnet, dass** die ersten Tragelemente (20) quer zur Längsachse (210) einen rechteckigen Querschnitt, vorzugsweise einen quadratischen Querschnitt, aufweisen.

6. Modulares Möbelsystem (1) nach Anspruch 5, **dadurch gekennzeichnet, dass** eine Kante des rechteckigen Querschnitts eine Länge aufweist, welche mit einer Kantenlänge der Grundfläche (271, 291) der prismenartigen Vorsprünge (260, 280) übereinstimmt.

7. Modulares Möbelsystem (1) nach einem der vorangehenden Ansprüche, **dadurch gekennzeichnet, dass** die ersten Tragelemente (20) und die zweiten Tragelemente (30) dieselbe Querschnittsform quer zu ihren jeweiligen Längsachsen (210, 310) aufweisen.

8. Modulares Möbelsystem (1) nach einem der vorangehenden Ansprüche, **dadurch gekennzeichnet, dass** die ersten Tragelemente (20) und/oder die zweiten Tragelement (30) in unterschiedlichen Längen existieren.

9. Modulares Möbelsystem (1) nach einem der vorangehenden Ansprüche, **dadurch gekennzeichnet, dass** das Möbelsystem (1) zusätzlich Halterungselemente (60) aufweist, die an jedem der Knoten (11) zwischen dem zweiten Tragelement (30) und den überlagerten Vorsprüngen (260, 280) angeordnet werden.

10. Modulares Möbelsystem (1) nach einem der vorangehenden Ansprüche, **dadurch gekennzeichnet, dass** das Möbelsystem (1) Ausgleichselemente (40) umfasst, welche Prismen mit der Form und Größe der Vorsprünge (260, 280) sind und mindestens eine Durchgangsöffnung zum Aufnehmen eines Befestigungselements (50) aufweisen.

11. Modulares Möbelsystem (1) nach einem der vorangehenden Ansprüche, **dadurch gekennzeichnet, dass** die mindestens eine Durchgangsöffnung des Vorsprungs, dessen Grundflächen (291, 292) von der Mitte (245) der Stirnseite (240) des ersten Tragelements (20) beabstandet sind, auf der von der Mitte (245) der Stirnseite (240) abgewandten Grundfläche (292) eine Einsenkung zur Aufnahme eines Befestigungselementekopfes aufweist und/oder die mindestens eine Durchgangsöffnung eines Ausgleichelements auf einer Grundflächenseite eine Einsenkung zur Aufnahme eines Befestigungselementekopfes aufweist.

12. Modulares Möbelsystem (1) nach einem der vorangehenden Ansprüche, **dadurch gekennzeichnet, dass** das Möbelsystem (1) Fußelemente (80, 81) aufweist, welche an einer Stirnseite (820) einen prismenartigen Vorsprung (860, 880) aufweisen, der hinsichtlich seiner Form und Positionierung an der einen Stirnseite einem der Vorsprünge (260, 280) eines der ersten Tragelemente (20) entspricht, und an der gegenüberliegenden Stirnseite (840) ein variables Abstandselement aufweist.

13. Modulares Möbelsystem (1) nach einem der vorangehenden Ansprüche, **dadurch gekennzeichnet, dass** der weitere Vorsprung (280) mit der von der Mitte (245) der Stirnseite abgewandten Grundfläche (292) bündig mit einer Außenfläche des ersten Tragelements (20) abschließt.

14. Modulares Möbelsystem (1) nach einem der Ansprüche 1 bis 13, **dadurch gekennzeichnet, dass** eine Summe der Höhen (275, 295) des einen Vorsprungs (260) und des weiteren Vorsprungs (280) geringer als eine Hälfte des Abstands (205) der Oberseite (201) des ersten Tagelements (20) zu der Unterseite (203) des ersten Tagelements (20) ist.

15. Modulares Möbelsystem (1) nach Anspruch 14, **dadurch gekennzeichnet, dass** die Höhen (275, 295) der Vorsprünge identisch sind und einem Sechstel des Abstands (205) der Oberseite (201) des ersten Tagelements (20) zu der Unterseite (203) des ersten Tagelements (20) entsprechen.

## Claims

1. Modular furniture system (1), suitable for forming a furniture piece (10), comprising identical first carrier elements (20) elongated along a longitudinal axis (210),
fastening elements,
and identical second carrier elements (30), which are each designed to receive one or more of the fastening elements on two diametrically opposite end faces (320, 340), wherein each of the first carrier elements (20) comprises
an end face (220) and a further end face (240) diametrically opposite along the longitudinal axis (210), and
wherein the longitudinal axis (210) extends through the end faces (220, 240), and each of the first carrier elements (20) has a protrusion (260) on the one end face (220) and a further protrusion (280) on the diametrically opposite further end face (240),
wherein each of the protrusions (260, 280) has an upper side (261, 281) and, oriented parallel thereto, a lower side (263, 283), and the upper sides (261, 281) and the lower sides (263, 283) of both the protrusions (260, 280) are likewise oriented parallel to one another and transverse to the end faces (220, 240),
and the protrusions (260, 280) each have at least one passage opening (276, 296) extending from the upper side (261, 281) to the lower side (263, 283), and
wherein the protrusions (260, 280) are formed with different offsets relative to the longitudinal axis (210), wherein the one protrusion (260) on the first end face (220) having an offset relative to the longitudinal axis (210) that differs from the offset of the further protrusion (280) on the diametrically opposite end face (240) from the longitudinal axis (210),
and wherein a furniture piece (10) is formed, by which, in each case, overlapping protrusions (260, 280) of different first carrier elements (20-i) in so-called nodes (11), and guiding at least one fastening element in each case through the at least one passage opening of the overlaid protrusions (260, 280) and fixing it in an end face (320) of a second carrier element (30),
and wherein penetration points (222, 242) of the longitudinal axis (210) through the end faces (220, 240) of the first carrier element (20) are defined in the middles (225, 245) of the end faces (220, 240), and
the protrusions (260, 280) are offset differently relative to the middles (225, 245) of the end faces (220, 240) of the first carrier elements (20), wherein, with a quadrilateral base surface shape of the prisms, the one protrusion (260) on the one end face (220) is delimited to the middle (225) by the base surface (271) facing the middle (225), and, on the diametrically opposite further end face (240) of the first carrier element (20), the base surface (291), facing the middle (245), of the further protrusion (280) exhibits a distance interval to the middle which corresponds to the height (275) of the one prism-shaped protrusion (260) on the one end face (220), and with a triangular base surface, a protrusion is aligned centred relative to the middle of the one end face, and, on the diametrically opposite end face of the carrier element, the base surface, facing the middle, of the further protrusion exhibits a distance interval to the middle which corresponds to half the height of the one prism-shaped protrusion on the one end face.

2. Modular furniture system (1) according to claim 1, **characterised in that** the two protrusions (260, 280) in each case exhibit the shape of a straight prism, and the base surfaces (271, 272, 291, 292) of the prisms which provide the shape of the protrusions (260, 280) are identical, preferably square.

3. Modular furniture system (1) according to claims 1 to 2, **characterised in that** the protrusions of each of the first carrier elements in each case exhibit the same height.

4. Modular furniture system (1) according to claims 1 to 3, **characterised in that** the longitudinal axis of the first carrier element, inasmuch as the protrusions (260, 280) and possible surface ornaments which may be present are not taken into account, is a main axis of inertia of the first carrier element and/or an axis of symmetry of a multiple rotation symmetry about the longitudinal axis (210) of the first carrier element (20).

5. Modular furniture system (1) according to any one of the preceding claims, **characterised in that** the first carrier elements (20) exhibit, transverse to the longitudinal axis (210) a rectangular cross-section, preferably a square cross-section.

6. Modular furniture system (1) according to claim 5, **characterised in that** one edge of the rectangular cross-section exhibits a length which corresponds to an edge length of the base surface (271, 291) of the prism-shaped protrusions (260, 280).

7. Modular furniture system (1) according to any one of the preceding claims, **characterised in that** the first carrier elements (20) and the second carrier elements (30) exhibit the same cross-section shape transverse to their respective longitudinal axes (210, 310).

8. Modular furniture system (1) according to any one of the preceding claims, **characterised in that** the first carrier elements (20) and/or the second carrier elements (30) exist in different lengths.

9. Modular furniture system (1) according to any one of the preceding claims, **characterised in that** the furniture system (1) comprises additional holding elements (60), which are arranged at each of the nodes (11) between the second carrier element (30) and the overlapped protrusions (260, 280).

10. Modular furniture system (1) according to any one of the preceding claims, **characterised in that** the furniture system (1) comprises compensation elements (40), which are prisms with the shape and size of the protrusions (260, 280) and comprise at least one passage opening for receiving a securing element (50).

11. Modular furniture system (1) according to any one of the preceding claims, **characterised in that** the at least one passage opening of the protrusion, of which the base surfaces (291, 292) are spaced at a distance from the middle (245) of the end face (240) of the first carrier element (20), exhibits on the base surface (292) facing away from the middle (245) of the end face (240) a depression for receiving a securing element head, and/or the at least one passage opening of a compensation element exhibits, on a base surface side, a depression for receiving a securing element head.

12. Modular furniture system (1) according to any one of the preceding claims, **characterised in that** the furniture system (1) comprises foot elements (80, 81), which on one end face, (820) comprise a prism-shaped protrusion (860, 880), which corresponds with regard to its shape and positioning, on the one end face, to one of the protrusions (260, 280) of one of the first carrier elements (20), and on the diametrically opposite end face (840) comprises a variable spacer element.

13. Modular furniture system (1) according to any one of the preceding claims, **characterised in that** the further protrusion (280) is closed off with the base surface (292) facing away from the middle (245) of the end surface flush with an outer surface of the first carrier element (20).

14. Modular furniture system (1) according to any one of claims 1 to 13, **characterised in that** a sum of the heights (275, 295) of the one protrusion (260) and of the further protrusion (280) is less than a half of the distance interval (205) from the upper side (201) of the first carrier element (20) to the lower side (203) of the first carrier element (20).

15. Modular furniture system (1) according to claim 14, **characterised in that** the heights (275, 295) of the protrusions are identical and correspond to one sixth of the distance interval (205) from the upper side (201) of the first carrier element (20) to the lower side (203) of the first carrier element (20).

## Revendications

1. Système de mobilier (1) modulaire adapté pour former une pièce de mobilier (10), comprenant des premiers éléments de support (20) similaires s'étendant en longueur le long d'un axe longitudinal (210),
des éléments de fixation,
et des deuxièmes éléments de support (30) similaires, qui sont réalisés afin de recevoir, au niveau de deux faces frontales (320, 340) diamétralement opposées, respectivement un ou plusieurs des éléments de fixation, dans lequel chacun des premiers éléments de support (20) présente un côté frontal (220) et un autre côté frontal (240) diamétralement opposé le long de l'axe longitudinal (210), et
dans lequel l'axe longitudinal (210) s'étend à travers les côtés frontaux (220, 240) et chacun des premiers éléments de support (20) présente, au niveau de l'un des côtés frontaux (220), une partie faisant saillie (260) et, au niveau de l'autre côté frontal (240) diamétralement opposé, une autre partie faisant saillie (280),
dans lequel chacune des parties faisant saillie (260, 280) présente un côté supérieur (261, 281) et un côté inférieur (263, 283) orienté de manière parallèle par rapport à ce dernier, et les côtés supérieurs (261, 281) et les côtés inférieurs (263, 283) des deux parties faisant saillie (260, 280) sont également orientés de manière parallèle les uns par rapport aux autres et de manière transversale par rapport aux côtés frontaux (220, 240),
et les parties faisant saillie (260, 280) présentent respectivement au moins une ouverture de passage (276, 296) s'étendant depuis le côté supérieur (261, 281) en direction du côté inférieur (263, 283), et
dans lequel les parties faisant saillie (260, 280) sont réalisées avec un décalage différent par rapport à l'axe longitudinal (210), dans lequel l'une des parties faisant saillie (260) présente, au niveau de l'un des côtés frontaux (220), par rapport à l'axe longitudinal (210), un décalage divergeant de l'axe longitudinal (210) par rapport à l'autre partie faisant saillie (280) au niveau au niveau du côté frontal (240) diamétralement opposé,
et dans lequel une pièce de mobilier (10) est formée, en ce que respectivement des parties faisant saillie (260, 280) de premiers éléments de support (20-i) autres sont superposées dans ce qu'on appelle des noeuds (11) et au moins un élément de fixation est guidé respectivement à travers l'au moins une ouverture de passage des parties faisant saillie (260, 280) superposées et est bloqué dans un côté frontal (320) d'un deuxième élément de support (30),
et dans lequel des points de rencontre (222, 242) de l'axe longitudinal (210) à travers les côtés frontaux (220, 240) du premier élément de support (20) définissent des milieux (225, 245) des côtés frontaux (220, 240), et les parties faisant saillie (260, 280) sont décalées différemment par rapport aux milieux (225, 245) des côtés frontaux (220, 240) des premiers éléments de support (20), dans lequel lorsque la forme de face de base des prismes est carrée, l'une des parties faisant saillie (260) jouxte l'un des côtés frontaux (220) au centre (225) par la face de base (271) tournée vers le centre (225) et la face de base (291), tournée vers le milieu (245), de l'autre partie faisant saillie (280) présente, au niveau de l'autre côté frontal (240) opposé du premier élément de support (20), un espacement par rapport au milieu, qui correspond à la hauteur (275) de l'une des parties faisant saillie (260) de type prisme au niveau de l'un des côtés frontaux (220),
et lorsqu'une face de base est triangulaire, une partie faisant saillie est orientée de manière centrée par rapport au milieu de l'un des côtés frontaux et la face de base, tournée vers le milieu, de l'autre partie faisant saillie présente, au niveau de l'autre côté frontal opposé de l'élément de support, un espacement par rapport au milieu, qui correspond à une moitié de la hauteur de l'une des parties faisant saillie de type prime au niveau de l'un des côtés frontaux.

2. Système de mobilier (1) modulaire selon la revendication 1, **caractérisé en ce que** les deux parties faisant saillie (260, 280) possèdent respectivement la forme d'un prisme droit, et les faces de base (271, 272, 291, 292) des prismes indiquant la forme des parties faisant saillie (260, 280) sont similaires, de préférence sont carrées.

3. Système de mobilier (1) modulaire selon la revendication 1 à 2, **caractérisé en ce que** les parties faisant saillie de chacun des premiers éléments de support présentent respectivement la même hauteur.

4. Système de mobilier (1) modulaire selon la revendication 1 à 3, **caractérisé en ce que** l'axe longitudinal du premier élément de support est, dans la mesure où les parties faisant saillie (260, 280) et éventuellement des ornements de surface présents ne sont pas pris en compte, un axe principal d'inertie du premier élément de support et/ou un axe de symétrie d'une symétrie en rotation multiple autour de l'axe longitudinal (210) du premier élément de support (20).

5. Système de mobilier (1) modulaire selon l'une quelconque des revendications précédentes, **caractérisé en ce que** les premiers éléments de support (20) présentent de manière transversale par rapport à l'axe longitudinal (210) une section transversale rectangulaire, de préférence une section transversale carrée.

6. Système de mobilier (1) modulaire selon la revendication 5, **caractérisé en ce qu'**une arête de la section transversale rectangulaire présente une longueur, qui coïncide à une longueur d'arête de la face de base (271, 291) des parties faisant saillie (260, 280) de type prisme.

7. Système de mobilier (1) modulaire selon l'une quelconque des revendications précédentes, **caractérisé en ce que** les premiers éléments de support (20) et les deuxièmes éléments de support (30) présentent la même forme de section transversale de manière transversale par rapport à leurs axes longitudinaux (210, 310) respectifs.

8. Système de mobilier (1) modulaire selon l'une quelconque des revendications précédentes, **caractérisé en ce que** les premiers éléments de support (20) et/ou les deuxièmes éléments de support (30) existent dans des longueurs différentes.

9. Système de mobilier (1) modulaire selon l'une quelconque des revendications précédentes, **caractérisé en ce que** le système de mobilier (1) présente en supplément des éléments de fixation (60), qui sont disposés au niveau de chacun des noeuds (11) entre le deuxième élément de support (30) et les parties faisant saillie (260, 280) superposées.

10. Système de mobilier (1) modulaire selon l'une quelconque des revendications précédentes, **caractérisé en ce que** le système de mobilier (1) comprend des éléments de compensation (40), qui sont des prismes présentant la forme et la taille des parties faisant saillie (260, 280) et qui présentent au moins une ouverture de passage servant à recevoir un élément de fixation (50).

11. Système de mobilier (1) modulaire selon l'une quelconque des revendications précédentes, **caractérisé en ce que** l'au moins une ouverture de passage de la partie faisant saillie, dont les faces de base (291, 292) sont tenues à distance du milieu (245) du côté frontal (240) du premier élément de support (20) présente, sur la face de base (292) opposée au milieu (245) du côté frontal (240), un enfoncement servant à recevoir une tête d'élément de fixation, et/ou l'au moins une ouverture de passage d'un élément de compensation présente, sur un côté de face de base, un enfoncement servant à recevoir une tête d'élément de fixation.

12. Système de mobilier (1) modulaire selon l'une quelconque des revendications précédentes, **caractérisé en ce que** le système de mobilier (1) présente des éléments formant des pieds (80, 81), qui présentent, au niveau d'un côté frontal (820), une partie faisant saillie (860, 880) de type prisme, qui correspond, concernant sa forme et son positionnement au niveau de l'un des côtés frontaux, à l'une des parties faisant saillie (260, 280) d'un des premiers éléments de support (20) et qui présente, au niveau du côté frontal (840) opposé un élément d'espacement variable.

13. Système de mobilier (1) modulaire selon l'une quelconque des revendications précédentes, **caractérisé en ce que** l'autre partie faisant saillie (280) se termine avec la face de base (292) opposée au milieu (245) du côté frontal de niveau avec une face extérieure du premier élément de support (20).

14. Système de mobilier (1) modulaire selon l'une quelconque des revendications 1 à 13, **caractérisé en ce qu'**une somme des hauteurs (275, 295) de l'une des parties faisant saillie (260) et de l'autre partie faisant saillie (280) est inférieure à une moitié de l'espacement (205) du côté supérieur (201) du premier élément de support (20) par rapport au côté inférieur (203) du premier élément de support (20).

15. Système de mobilier (1) modulaire selon la revendication 14, **caractérisé en ce que** les hauteurs (275, 295) des parties faisant saillie sont identiques et correspondent à un sixième de l'espacement (205) du côté supérieur (201) du premier élément de support (20) par rapport au côté inférieur (203) du premier élément de support (20).
